# EUROPEAN PATENT APPLICATION

(11) **EP 4 132 026 A1**
(43) Date of publication of application: **08.02.2023**
(21) Application number: 21787859.4
(22) Date of filing: 02.04.2021
(51) Int. Cl.: H04W 4/24, H04W 28/24, H04W 76/10, H04W 76/11

(54) **SERVICE ASSURANCE METHOD AND APPARATUS**

(30) Priority: 17.04.2020 CN 202010303982; 12.08.2020 CN 202010809066
(71) Applicant: Huawei Technologies Co., Ltd., Longgang Shenzhen, Guangdong 518129 (CN)
(72) Inventor: DING, Hui, Shenzhen, Guangdong 518129 (CN); XING, Weijun, Shenzhen, Guangdong 518129 (CN); WU, Wenfu, Shenzhen, Guangdong 518129 (CN)
(74) Representative: Epping - Hermann - Fischer
(86) International application number: PCT/CN2021/085334
(87) International publication number: WO 2021/208765

(57) **Abstract**

Embodiments of this application provide a service guarantee method and apparatus. The service guarantee method is applied to a scenario in which a remote terminal device accesses a network via a relay device. The method includes: A PCC rule generated by a policy control network element based on subscription data of the remote terminal device includes a second quality of service QoS parameter of a second communication interface between the remote terminal device and the relay device, so that a session management network element can generate, according to the received PCC rule, a second QoS rule corresponding to the second communication interface, and the session management network element can send the second QoS rule to the relay device. The QoS rule required by the second communication interface is generated based on the subscription data of the remote terminal device, so that performance of accessing a service by the remote terminal device via the relay device can be ensured.

## Description

This application claims priority to Chinese Patent Application No. 202010303982.7, filed with the China National Intellectual Property Administration on April 17, 2020 and entitled "SERVICE GUARANTEE METHOD AND APPARATUS", which is incorporated herein by reference in its entirety.

This application claims priority to Chinese Patent Application No. 202010809066.0, filed with the China National Intellectual Property Administration on August 12, 2020 and entitled "SERVICE GUARANTEE METHOD AND APPARATUS", which is incorporated herein by reference in its entirety.

### TECHNICAL FIELD

This application relates to the communication field, and more specifically, to a service guarantee method and apparatus.

### BACKGROUND

A proximity-based service (proximity-based service, ProSe) relay (relay) communication solution is defined in a 4th generation (4th generation, 4G) communication protocol. A current protocol specifies that the ProSe relay communication solution is used only for accessing a public safety (public safety) service. Therefore, a communication interface (for example, a PC5 interface) established between a remote terminal device and a relay device only needs to support a quality of service (quality of service, QoS) guarantee for the public safety service.

In a currently discussed ProSe relay communication scenario, the remote terminal device may access a plurality of services (for example, an augmented reality (augmented reality, AR) or virtual reality (virtual reality, VR) service) in a network via the relay device, and the service is no longer limited to the public safety service. In this case, a QoS rule (rule) specified in the current protocol may no longer conform to a QoS guarantee actually required for a service. Therefore, how to enable the remote terminal device to access different services via the relay device becomes an urgent problem to be resolved.

### SUMMARY

This application provides a service guarantee method and apparatus, to improve performance of accessing a service by a remote terminal device via a relay device.

According to a first aspect, a service guarantee method is provided. The service guarantee method may be performed by a policy control network element, or may be performed by a chip or a circuit disposed in the policy control network element. This is not limited in this application.

The service guarantee method is applied to a case in which a remote terminal device accesses a network via a relay device. The method includes:
The policy control network element obtains a first identifier of the remote terminal device, where the first identifier is used to obtain subscription data of the remote terminal device. The policy control network element generates a policy and charging control PCC rule based on the subscription data of the remote terminal device. The policy control network element sends the PCC rule to a session management network element, where the PCC rule includes a first quality of service QoS parameter of a first communication interface and a second QoS parameter of a second communication interface, the first communication interface is a communication interface between the relay device and an access network device, the second communication interface is a communication interface between the relay device and the remote terminal device, the first QoS parameter is used to generate a first QoS rule corresponding to the first communication interface, and the second QoS parameter is used to generate a second QoS rule corresponding to the second communication interface.

According to the service guarantee method provided in this embodiment of this application, a core network device side (for example, the policy control network element) can obtain the subscription data of the remote terminal device based on the received first identifier of the remote terminal device, and generate the PCC rule based on the subscription data of the remote terminal device, where the second QoS parameter in the PCC rule is used to generate the QoS rule corresponding to the second communication interface between the relay device and the remote terminal device. Compared with a QoS rule that is set only for a relay service type or subscription data of the relay device, the QoS rule generated when the subscription data of the remote terminal device is considered better conforms to a QoS guarantee for a service actually accessed by the remote terminal device.

Specifically, the session management network element can generate the second QoS rule because the PCC rule including the second QoS parameter is received from the policy control network element. The second QoS parameter is used to generate the second QoS rule, so that the QoS rule generated by the session management network element meets a requirement of the second communication interface.

With reference to the first aspect, in some implementations of the first aspect, the method further includes: The policy control network element obtains internet protocol IP address information of the remote terminal device. The policy control network element determines flow description information based on the IP address information, where the flow description information is carried in the PCC rule.

According to the service guarantee method provided in this embodiment of this application, the policy control network element can determine the flow description information in the PCC rule based on the obtained IP address information. With reference to the first aspect, in some implementations of the first aspect, that the policy control network element obtains a first identifier of the remote terminal device includes: The policy control network element receives a second message from the session management network element, where the second message includes the first identifier of the remote terminal device. The policy control network element receives a policy authorization request message from an application network element, where the policy authorization request message includes a second identifier of the remote terminal device, and the second identifier is used to determine the first identifier.

In this embodiment of this application, the policy control network element may obtain the first identifier of the remote terminal device in different manners, to improve flexibility of the solution.

With reference to the first aspect, in some implementations of the first aspect, the second identifier includes at least one of the following identifiers: a generic public subscription identifier GPSI of the remote terminal device, a user identifier allocated by a third party to the remote terminal device, an internet protocol version 6 IPv6 address of the remote terminal device, an IPv6 address prefix of the remote terminal device, and an identifier including an internet protocol version 4 IPv4 address and a transmission control protocol or user datagram protocol TCPIUDP port number that are of the relay device.

In this embodiment of this application, the second identifier of the remote terminal device is specifically represented in a plurality of forms, to improve flexibility of the solution.

With reference to the first aspect, in some implementations of the first aspect, the second message further includes session management subscription data of the remote terminal device, the session management subscription data includes an aggregate maximum bit rate (aggregate maximum bit rate, AMBR) of the remote terminal device, and the second QoS parameter includes an AMBR available to the remote terminal device.

With reference to the first aspect, in some implementations of the first aspect, the policy authorization request message further includes a service identifier and/or a QoS parameter requirement, where the service identifier indicates a service type, and the QoS parameter requirement is used to assist the policy control network element in generating the PCC rule.

In addition to the second identifier of the remote terminal device, the policy authorization request message sent by the application network element to the policy control network element may further include the QoS parameter requirement used to assist the policy control network element in generating the PCC rule.

With reference to the first aspect, in some implementations of the first aspect, the service identifier includes at least one of the following information: a first relay service code (relay service code or relay service filter, referred to as the relay service code below), a second relay service code, an application identifier APP ID, and a proximity-based service application name ProSe APP ID, where the first relay service code is a relay service code configured for the remote terminal device, and the second relay service code is a relay service code configured for the relay device.

In this embodiment of this application, the service identifier is specifically represented in a plurality of forms, to improve flexibility of the solution.

With reference to the first aspect, in some implementations of the first aspect, before that the policy control network element receives a policy authorization request message from an application network element, the method further includes: The policy control network element receives a subscription message from the application network element, where the subscription message is used to subscribe to information indicating whether the remote terminal device goes online. The policy control network element sends a notification message to the application network element, where the notification message indicates that the remote terminal device goes online.

In this embodiment of this application, the application network element sends the policy authorization request message to the policy control network element because the application network element learns that the remote terminal device goes online.

With reference to the first aspect, in some implementations of the first aspect, the notification message includes the first identifier and the service identifier, and the service identifier identifies the service type.

The notification message includes the first identifier and the service identifier, so that the application network element delivers the policy authorization request message corresponding to a service, to improve accuracy of the solution.

With reference to the first aspect, in some implementations of the first aspect, the second message and/or the policy authorization request message further include/includes: the first relay service code relay service code and/or a second relay service code, where the first relay service code is the relay service code configured for the remote terminal device, and the second relay service code is the relay service code configured for the relay device. That the policy control network element generates a policy and charging control PCC rule based on the subscription data of the remote terminal device includes: The policy control network element generates the PCC rule based on the subscription data of the remote terminal device and the first relay service code and/or the second relay service code.

Further, the policy control network element may further obtain the relay service code configured for the relay device and/or the relay service code configured for the remote terminal device. Therefore, the policy control network element learns of a service type of a currently initiated service when generating the second QoS rule, and generates, based on the service type, the second QoS rule that better meets a service requirement, to further ensure performance of accessing the service by the remote terminal device via the relay device.

With reference to the first aspect, in some implementations of the first aspect, the method further includes: The policy control network element determines the service type based on the first relay service code and/or the second relay service code. Alternatively, the policy control network element learns of the service type from a 5G direct discovery name management function DDNMF network element based on the first relay service code and/or the second relay service code.

In this embodiment of this application, the policy control network element can directly determine, based on the first relay service code and/or the second relay service code, the service type of the currently initiated service, or learn of the service type of the currently initiated service from the DDNMF network element after performing signaling exchange with the DDNMF network element. The service type of the currently initiated service is determined in the foregoing two different manners, so that network configuration flexibility can be effectively improved.

With reference to the first aspect, in some implementations of the first aspect, the first identifier of the remote terminal device includes: the generic public subscription identifier GPSI or the user identifier user ID allocated by the third-party application to the remote terminal device.

In this embodiment of this application, the first identifier of the remote terminal device is specifically represented in a plurality of forms, to improve flexibility of the solution.

According to a second aspect, a service guarantee method is provided. The service guarantee method may be performed by an application network element, or may be performed by a chip or a circuit disposed in the application network element. This is not limited in this application.

The service guarantee method includes:
The application network element determines a policy authorization request message. The application network element sends the policy authorization request message to a policy control network element, where the policy authorization request message includes a second identifier of a remote terminal device, and the remote terminal device is a terminal device that accesses a network via another terminal device. The second identifier of the remote terminal device is used to determine a first identifier of the remote terminal device, the first identifier of the remote terminal device is used to obtain subscription data of the remote terminal device, the subscription data of the remote terminal device is used to determine a second quality of service QoS rule, and the second QoS rule is a QoS rule corresponding to a second communication interface between a relay device and the remote terminal device.

According to the service guarantee method provided in this embodiment of this application, a core network device side (for example, the policy control network element) can obtain the subscription data of the remote terminal device based on the received first identifier of the remote terminal device, and generate a PCC rule based on the subscription data of the remote terminal device, where a second QoS parameter in the PCC rule is used to generate the QoS rule corresponding to the second communication interface between the relay device and the remote terminal device. Compared with a QoS rule that is set only for a relay service type or subscription data of the relay device, the QoS rule generated when the subscription data of the remote terminal device is considered better conforms to a QoS guarantee for a service actually accessed by the remote terminal device.

With reference to the second aspect, in some implementations of the second aspect, before that the application network element determines a policy authorization request message, the method further includes: The application network element sends a subscription message to the policy control network element, where the subscription message is used to subscribe to information indicating whether the remote terminal device goes online. The application network element receives a notification message from the policy control network element, where the notification message indicates that the remote terminal device goes online. Alternatively, the application network element obtains information about the policy control network element through a query request message.

In this embodiment of this application, before determining the policy authorization request message, the application network element may first subscribe to a network access event of the remote terminal device, or may actively query the information about the policy control network element, and then send the policy authorization request message to the policy control network element. Different solutions for triggering the application network element to send the policy authorization request message are provided to improve flexibility of the solution.

With reference to the second aspect, in some implementations of the second aspect, that the application network element determines a policy authorization request message includes: The application network element determines the policy authorization request message based on the first identifier and a service identifier, where the service identifier identifies a service type, and the first identifier and the service identifier are carried in the notification message, or the first identifier and the service identifier are obtained by the application network element through perception via a user plane.

In this embodiment of this application, the application network element may determine the policy authorization request message based on the first identifier and the service identifier, and the first identifier and the service identifier may be obtained in different manners, to improve flexibility of the solution.

With reference to the second aspect, in some implementations of the second aspect, when the application network element obtains the first identifier and the service identifier through perception via the user plane, the method further includes: The application network element perceives, via the user plane, an event that the remote terminal device goes online.

In this embodiment of this application, the application network element may perceive, via the user plane, whether the remote terminal device goes online, to obtain the first identifier and the service identifier

With reference to the second aspect, in some implementations of the second aspect, the policy authorization request message further includes a service identifier and/or a QoS parameter requirement, where the service identifier indicates a service type, and the QoS parameter requirement is used to assist the policy control network element in generating the PCC rule.

In addition to the second identifier of the remote terminal device, the policy authorization request message sent by the application network element to the policy control network element may further include the QoS parameter requirement used to assist the policy control network element in generating the PCC rule.

With reference to the second aspect, in some implementations of the second aspect, the service identifier includes at least one of the following information: a first relay service code relay service code, a second relay service code, an application identifier APP ID, and a proximity-based service application name ProSe APP ID, where the first relay service code is a relay service code configured for the remote terminal device, and the second relay service code is a relay service code configured for the relay device.

In this embodiment of this application, the service identifier is specifically represented in a plurality of forms, to improve flexibility of the solution.

With reference to the second aspect, in some implementations of the second aspect, the second identifier of the remote terminal device includes at least one of the following identifiers: a generic public subscription identifier GPSI of the remote terminal device, a user identifier user ID allocated by a third party to the remote terminal device, an internet protocol version 6 IPv6 address of the remote terminal device, an IPv6 address prefix of the remote terminal device, and an identifier including an internet protocol version 4 IPv4 address and a transmission control protocol or user datagram protocol TCP/UDP port number that are of the relay device.

In this embodiment of this application, the second identifier of the remote terminal device is specifically represented in a plurality of forms, to improve flexibility of the solution.

According to a third aspect, a service guarantee method is provided. The service guarantee method may be performed by a session management network element, or may be performed by a chip or a circuit disposed in the session management network element. This is not limited in this application.

The service guarantee method is applied to a case in which a remote terminal device accesses a network via a relay device. The method includes:
The session management network element receives a first message from the relay device, where the first message includes a first identifier of the remote terminal device. The session management network element sends a second message to a policy control network element, where the second message includes the first identifier of the remote terminal device, the first identifier of the remote terminal device is used to obtain subscription data of the remote terminal device, the subscription data of the remote terminal device is used to determine a second quality of service QoS rule, and the second QoS rule is a QoS rule corresponding to a second communication interface between the relay device and the remote terminal device.

According to the service guarantee method provided in this embodiment of this application, the relay device reports the first identifier of the remote terminal device to a core network device side (for example, the policy control network element) via an access network device. Therefore, a core network device can obtain the subscription data of the remote terminal device based on the received first identifier of the remote terminal device, and generate, based on the subscription data of the remote terminal device, the QoS rule corresponding to the second communication interface between the relay device and the remote terminal device. Compared with a QoS rule that is set only for a public safety service, the QoS rule generated when the subscription data of the remote terminal device is considered better conforms to a QoS guarantee for a service actually accessed by the remote terminal device.

With reference to the third aspect, in some implementations of the third aspect, the method further includes: The session management network element receives a policy and charging control PCC rule from the policy control network element, where the PCC rule includes a first QoS parameter of a first communication interface and a second QoS parameter of the second communication interface, and the first communication interface is a communication interface between the relay device and the access network device. The session management network element generates, based on the first QoS parameter, a first QoS rule corresponding to the first communication interface. The session management network element generates the second QoS rule based on the second QoS parameter.

Specifically, the session management network element can generate the second QoS rule because the PCC rule including the second QoS parameter is received from the policy control network element. The second QoS parameter is used to generate the second QoS rule, so that the QoS rule generated by the session management network element meets a requirement of the second communication interface.

With reference to the third aspect, in some implementations of the third aspect, the method further includes: The session management network element allocates a QoS flow identifier QFI to the PCC rule, where the QFI uniquely identifies a QoS flow corresponding to the PCC rule. The session management network element sends a third message to the access network device, where the third message includes the QFI, the first QoS rule, and the second QoS rule. Further, after receiving the PCC rule including the second QoS parameter from the policy control network element, the session management network element allocates the QFI to the PCC rule to identify the QoS flow corresponding to the PCC rule, and delivers the QFI to the relay device and the remote terminal device via the access network device, so that the relay device, the remote terminal device, and the access network device can identify the QoS flow and perform a QoS guarantee corresponding to the QFI.

With reference to the third aspect, in some implementations of the third aspect, the first message and the second message each further include a first relay service code relay service code and/or a second relay service code, where the first relay service code or the second relay service code is used to determine the second QoS rule, the first relay service code is a relay service code configured for the remote terminal device, and the second relay service code is a relay service code configured for the relay device.

Further, the relay device may further report, to the core network device via the access network device, the relay service code configured for the relay device or the remote terminal device. Therefore, the core network device learns of a service type of a currently initiated service when generating the second QoS rule, and generates, based on the service type, the second QoS rule that better meets a service requirement, to further ensure performance of accessing a service by the remote terminal device via the relay device.

With reference to the third aspect, in some implementations of the third aspect, the second message further includes an identifier of the relay device and/or internet protocol IP address information of the remote terminal device.

The second message may further include the identifier of the relay device and/or the IP address information of the remote terminal device.

With reference to the third aspect, in some implementations of the third aspect, the first identifier of the remote terminal device includes: a generic public subscription identifier GPSI or a user identifier user ID allocated by a third-party application to the remote terminal device.

In this embodiment of this application, the first identifier of the remote terminal device is specifically represented in a plurality of forms, to improve flexibility of the solution.

According to a fourth aspect, a service guarantee method is provided. The service guarantee method may be performed by a relay device, or may be performed by a chip or a circuit disposed in the relay device. This is not limited in this application.

The service guarantee method is applied to a case in which a remote terminal device accesses a network via the relay device. The method includes:
The relay device sends a first message to a session management network element, where the first message includes a first identifier of the remote terminal device. The relay device receives a second quality of service QoS rule from the session management network element, where the second QoS rule is generated based on subscription data of the remote terminal device corresponding to the first identifier. The relay device performs a QoS guarantee on a second communication interface between the relay device and the remote terminal device according to the second QoS rule.

According to the service guarantee method provided in this embodiment of this application, the relay device reports the first identifier of the remote terminal device to a core network device side (for example, a policy control network element) via an access network device. Therefore, a core network device can obtain the subscription data of the remote terminal device based on the received first identifier of the remote terminal device, and generate, based on the subscription data of the remote terminal device, the QoS rule corresponding to the second communication interface between the relay device and the remote terminal device. Compared with a QoS rule that is set only for a relay service type or subscription data of the relay device, the QoS rule generated when the subscription data of the remote terminal device is considered better conforms to a QoS guarantee for a service actually accessed by the remote terminal device.

With reference to the fourth aspect, in some implementations of the fourth aspect, the method further includes: The relay device sends the second QoS rule to the remote terminal device.

After receiving the second QoS rule from the core network device side via the access network device, the relay device needs to transmit the second QoS rule to the remote terminal device, so that the remote terminal device can also learn of the second QoS rule, and the QoS guarantee is provided for the remote terminal device to access the service via the relay device.

With reference to the fourth aspect, in some implementations of the fourth aspect, the first identifier of the remote terminal device includes a generic public subscription identifier GPSI or a user identifier user ID allocated by a third-party application to the remote terminal device.

In this embodiment of this application, the first identifier of the remote terminal device is specifically represented in a plurality of forms, to improve flexibility of the solution.

With reference to the fourth aspect, in some implementations of the fourth aspect, the first message further includes a first relay service code relay service code and/or a second relay service code, where the first relay service code or the second relay service code is used to determine the second QoS rule, the first relay service code is a relay service code configured for the remote terminal device, and the second relay service code is a relay service code configured for the relay device.

Further, the relay device may further report, to the core network device via the access network device, the relay service code configured for the relay device or the remote terminal device. Therefore, the core network device learns of a service type of a currently initiated service when generating the second QoS rule, and generates, based on the service type, the second QoS rule that better meets a service requirement, to further ensure performance of accessing the service by the remote terminal device via the relay device.

With reference to the fourth aspect, in some implementations of the fourth aspect, the first relay service code and/or the second relay service code are/is associated with session management subscription data of the remote terminal device.

With reference to the fourth aspect, in some implementations of the fourth aspect, the method further includes: The relay device receives a fourth message from the session management network element, where the fourth message includes the session management subscription data of the remote terminal device, and the session management subscription data includes an AMBR of the remote terminal device. The relay device determines an AMBR of a PC5 link between the relay device and the remote terminal device based on the AMBR of the remote terminal device. With reference to the fourth aspect, in some implementations of the fourth aspect, that a remote terminal device accesses a network via the relay device includes: The relay device establishes a communication connection to the remote terminal device. The relay device establishes a protocol data unit PDU session to a data network, where the PDU session is used to transmit a service of the remote terminal device.

In this embodiment of this application, the remote terminal device can access the network via the relay device because the communication connection (for example, a PC5 connection) is established between the remote terminal device and the relay device, and the PDU session used to transmit the service of the remote terminal device is established between the relay device and the data network, so that the remote terminal device can access the service via the relay device.

With reference to the fourth aspect, in some implementations of the fourth aspect, the relay device includes a terminal device.

In this embodiment of this application, a specific form of the relay device is the terminal device. To be specific, both the remote terminal device and the relay device may be terminal devices. In this case, a communication interface between the relay device and the remote terminal device may be referred to as a PC5 interface.

According to a fifth aspect, a service guarantee method is provided. The service guarantee method may be performed by a remote terminal device, or may be performed by a chip or a circuit disposed in the remote terminal device. This is not limited in this application.

The service guarantee method is applied to a case in which the remote terminal device accesses a network via a relay device. The method includes: The remote terminal device receives a second quality of service QoS rule from the relay device, where the second QoS rule is generated based on subscription data of the remote terminal device. The remote terminal device performs a QoS guarantee on a second communication interface between the relay device and the remote terminal device according to the second QoS rule.

According to the service guarantee method provided in this embodiment of this application, the remote terminal device receives the QoS rule that corresponds to the second communication interface between the relay device and the remote terminal device and that is generated based on the subscription data of the remote terminal device. Compared with a QoS rule that is set only for a relay service type or subscription data of the relay device, the QoS rule generated when the subscription data of the remote terminal device is considered better conforms to a QoS guarantee for a service actually accessed by the remote terminal device.

According to a sixth aspect, a service guarantee method is provided. The service guarantee method may be performed by a session management network element, or may be performed by a chip or a circuit disposed in the session management network element. This is not limited in this application.

The service guarantee method is applied to a case in which a remote terminal device accesses a network via a relay device. The method includes: The session management network element obtains session management subscription data of the remote terminal device, where the session management subscription data includes an AMBR of the remote terminal device. The session management network element generates a packet detection rule (packet detection rule, PDR) corresponding to the remote terminal device, where the PDR includes a quality of service QoS enforcement rule (QoS enforcement rule, QER), and a maximum bandwidth in the QER is determined based on the AMBR of the remote terminal device. The session management network element sends the PDR to a user plane network element. In this embodiment of this application, if the session management network element obtains the AMBR of the remote terminal device, the session management network element may determine, in an N4 session configuration, the maximum bandwidth in the QER of the remote terminal device based on the AMBR of the remote terminal device. Therefore, in a process of transmitting a data packet of the remote terminal device, the user plane network element may limit, based on the maximum bandwidth of the remote terminal device, a rate of sending data to the remote terminal device.

With reference to the sixth aspect, in some implementations of the sixth aspect, the method further includes: The session management network element sends a fourth message to the relay device, where the fourth message includes the AMBR of the remote terminal device.

In this embodiment of this application, the session management network element may send the AMBR of the remote terminal device to the relay device, so that the relay device can update an AMBR of a PC5 link to the AMBR of the remote terminal device.

With reference to the sixth aspect, in some implementations of the sixth aspect, the AMBR of the remote terminal device includes at least one of the following: a subscribed session AMBR (subscribed session-AMBR) of the remote terminal device, a PC5 interface AMBR (UE-PC5-AMBR) of the remote terminal device, and a PC5 link AMBR (PC5 Link-AMBR) of the remote terminal device.

With reference to the sixth aspect, in some implementations of the sixth aspect, the maximum bandwidth in the QER is a smaller one of the subscribed session AMBR of the remote terminal device and the PC5 interface AMBR/PC5 link AMBR of the remote terminal device.

With reference to the sixth aspect, in some implementations of the sixth aspect, the method further includes: The session management network element sends a second message to a policy control network element, where the second message includes the session management subscription data. The session management network element receives a session-related policy and/or a policy and charging control PCC rule from the policy control network element, where the session-related policy and/or the PCC rule include/includes a second QoS parameter of a second communication interface, the second communication interface is a communication interface between the relay device and the remote terminal device, the second QoS parameter includes an AMBR available to the remote terminal device, and the maximum bandwidth in the QER is a smaller one of the AMBR of the remote terminal device and the AMBR available to the remote terminal device.

With reference to the sixth aspect, in some implementations of the sixth aspect, that the session management network element obtains session management subscription data of the remote terminal device includes: The session management network element receives a first message from the relay device, where the first message includes a first identifier of the remote terminal device. The session management network element obtains the session management subscription data based on the first identifier.

With reference to the sixth aspect, in some implementations of the sixth aspect, that the session management network element obtains the session management subscription data based on the first identifier includes: The session management network element sends a second request message to a data management network element/data repository network element, where the second request message is used to request the session management subscription data, and the second request message includes the first identifier. The session management network element receives a second response message from the data management network element/data repository network element, where the second response message includes the session management subscription data.

With reference to the sixth aspect, in some implementations of the sixth aspect, the second request message further includes first instruction information, and the first instruction information indicates the remote terminal device to access the network via the relay device.

With reference to the sixth aspect, in some implementations of the sixth aspect, that the session management network element obtains the session management subscription data based on the first identifier includes: The session management network element sends a third request message to a data network-authentication, authorization and accounting (data network-authentication, authorization and accounting, DN-AAA) server, where the third request message is used to request the session management subscription data, and the third request message includes the first identifier. The session management network element receives a third response message from the DN-AAA server, where the third response message includes the session management subscription data.

With reference to the sixth aspect, in some implementations of the sixth aspect, that the session management network element obtains session management subscription data of the remote terminal device includes: The session management network element receives a first relay service code and/or a second relay service code from the relay device, where the first relay service code and/or the second relay service code are/is associated with the session management subscription data. The session management network element sends a third request message to a data management network element/data repository network element, where the third request message is used to request the session management subscription data, and the third request message includes the first relay service code and/or the second relay service code. The session management network element receives a third response message from the data management network element/data repository network element, where the third response message includes the session management subscription data.

With reference to the sixth aspect, in some implementations of the sixth aspect, that the session management network element obtains session management subscription data of the remote terminal device includes: The session management network element receives a first message from the relay device, where the first message includes the session management subscription data.

According to a seventh aspect, a service guarantee method is provided. The service guarantee method may be performed by a user plane network element, or may be performed by a chip or a circuit disposed in the user plane network element. This is not limited in this application.

The service guarantee method is applied to a case in which a remote terminal device accesses a network via a relay device. The method includes: The user plane network element receives a PDR from a session management network element, where the PDR corresponds to the remote terminal device, the PDR includes a QER, and a maximum bandwidth in the QER is determined based on an AMBR of the remote terminal device. The user plane network element determines, based on the maximum bandwidth in the QER, a rate of sending data to the remote terminal device.

In this embodiment of this application, after receiving the PDR from the session management network element, the user plane network element may obtain the maximum bandwidth in the QER from the PDR. Therefore, in a process of transmitting a data packet of the remote terminal device, the user plane network element may limit, based on the maximum bandwidth of the remote terminal device, the rate of sending the data to the remote terminal device.

With reference to the seventh aspect, in some implementations of the seventh aspect, the AMBR of the remote terminal device includes at least one of the following: a subscribed session AMBR of the remote terminal device, a PC5 interface AMBR of the remote terminal device, and a PC5 link AMBR of the remote terminal device.

With reference to the seventh aspect, in some implementations of the seventh aspect, the maximum bandwidth in the QER is a smaller one of the subscribed session AMBR of the remote terminal device and the PC5 interface AMBR/PC5 link AMBR of the remote terminal device.

According to an eighth aspect, a relay service code obtaining method is provided. The relay service code obtaining method may be performed by a policy control network element, or may be performed by a chip or a circuit disposed in the policy control network element. This is not limited in this application.

The relay service code obtaining method is applied to a case in which a remote terminal device accesses a network via a relay device. The method includes: The policy control network element obtains session management subscription data of the remote terminal device, where the session management subscription data includes an AMBR of the remote terminal device. The policy control network element determines a relay service code based on the subscription data, where the relay service code is associated with the session management subscription data. The policy control network element sends the relay service code to the remote terminal device and the relay device.

This embodiment of this application provides the relay service code obtaining method, to associate the session management subscription data of the remote terminal device with the relay service code, so that the remote terminal device can match, based on the relay service code, the relay device that can provide a relay service for the remote terminal device.

With reference to the eighth aspect, in some implementations of the eighth aspect, the method further includes: The policy control network element sends the relay service code and second indication information to a data management network element/data repository network element, where the second indication information indicates that the relay service code is associated with the session management subscription data.

With reference to the eighth aspect, in some implementations of the eighth aspect, the method further includes: The policy control network element sends the session management subscription data to the remote terminal device and the relay device.

With reference to the eighth aspect, in some implementations of the eighth aspect, the AMBR of the remote terminal device includes at least one of the following: a subscribed session AMBR of the remote terminal device, a PC5 interface AMBR of the remote terminal device, and a PC5 link AMBR of the remote terminal device.

According to a ninth aspect, a service guarantee apparatus is provided. The service guarantee apparatus includes a processor, configured to implement a function of the policy control network element in the method described in the first aspect.

Specifically, the service guarantee apparatus includes:
a receiving unit, configured to obtain a first identifier of a remote terminal device, where the first identifier of the remote terminal device is used to obtain subscription data of the remote terminal device
a processing unit, configured to generate a policy and charging control PCC rule based on the subscription data of the remote terminal device, where the PCC rule includes a first QoS parameter of a first communication interface and a second QoS parameter of a second communication interface; and
a sending unit, configured to send the PCC rule to a session management network element.

The first communication interface is a communication interface between a relay device and an access network device, the second communication interface is a communication interface between the relay device and the remote terminal device, the first QoS parameter is used to generate a first QoS rule corresponding to the first communication interface, and the second QoS parameter is used to generate a second QoS rule corresponding to the second communication interface.

With reference to the ninth aspect, in some implementations of the ninth aspect, the receiving unit is further configured to obtain internet protocol IP address information of the remote terminal device; and the processing unit is further configured to determine flow description information based on the IP address information, where the flow description information is carried in the PCC rule.

With reference to the ninth aspect, in some implementations of the ninth aspect, that the receiving unit obtains an identifier of the remote terminal device includes:
The receiving unit receives a second message from the session management network element, where the second message includes the identifier of the remote terminal device.

Alternatively, the receiving unit receives a policy authorization request message from an application network element, where the policy authorization request message includes a second identifier of the remote terminal device, and the second identifier is used to determine the first identifier.

With reference to the ninth aspect, in some implementations of the ninth aspect, the second message further includes session management subscription data of the remote terminal device, the session management subscription data includes an AMBR of the remote terminal device, and the second QoS parameter includes an AMBR available to the remote terminal device.

With reference to the ninth aspect, in some implementations of the ninth aspect, the policy authorization request message further includes:
a service identifier and/or a QoS parameter requirement, where the service identifier indicates a service type, and the QoS parameter requirement is used to assist the policy control network element in generating the PCC rule.

With reference to the ninth aspect, in some implementations of the ninth aspect, the service identifier includes at least one of the following information:
a first relay service code relay service code, a second relay service code, an application identifier APP ID, and a proximity-based service application name ProSe APP ID, where
the first relay service code is a relay service code configured for the remote terminal device, and the second relay service code is a relay service code configured for the relay device.

With reference to the ninth aspect, in some implementations of the ninth aspect, before the receiving unit receives the policy authorization request message from the application network element, the receiving unit is further configured to receive a subscription message from the application network element, where the subscription message is used to subscribe to information indicating whether the remote terminal device goes online.

The sending unit is further configured to send a notification message to the application network element, where the notification message indicates that the remote terminal device goes online.

With reference to the ninth aspect, in some implementations of the ninth aspect, the second message and/or the policy authorization request message further include/includes:
the first relay service code relay service code and/or the second relay service code, where
the first relay service code is the relay service code configured for the remote terminal device, and the second relay service code is the relay service code configured for the relay device.

That the processing unit generates the policy and charging control PCC rule based on the subscription data of the remote terminal device includes:
The processing unit generates the PCC rule based on the subscription data of the remote terminal device and the first relay service code and/or the second relay service code.

With reference to the ninth aspect, in some implementations of the ninth aspect, the processing unit is further configured to determine the service type based on the first relay service code and/or the second relay service code. Alternatively, the processing unit is further configured to learn of the service type from a 5G direct discovery name management function DDNMF network element based on the first relay service code and/or the second relay service code.

With reference to the ninth aspect, in some implementations of the ninth aspect, the first identifier of the remote terminal device includes:
a generic public subscription identifier GPSI or a user identifier user ID allocated by a third-party application to the remote terminal device.

Optionally, the service guarantee apparatus may further include a memory. The memory is coupled to the processor, and the processor is configured to implement the function of the policy control network element in the method described in the first aspect.

In a possible implementation, the memory is configured to store program instructions and data. The memory is coupled to the processor. The processor may invoke and execute the program instructions stored in the memory, to implement the function of the policy control network element in the method described in the first aspect.

Optionally, the service guarantee apparatus may further include a communication interface, and the communication interface is used by the service guarantee apparatus to communicate with another device. When the service guarantee apparatus is user equipment, the communication interface may be a transceiver, an input/output interface, a circuit, or the like.

In a possible design, the service guarantee apparatus includes a processor and a communication interface.

The processor communicates with an external device through the communication interface.

The processor is configured to run a computer program, to enable the service guarantee apparatus to implement any method described in the first aspect.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a tenth aspect, a service guarantee apparatus is provided. The service guarantee apparatus includes a processor, configured to implement a function of the application network element in the method described in the second aspect.

Specifically, the service guarantee apparatus includes:
a processing unit, configured to determine a policy authorization request message; and
a sending unit, configured to send the policy authorization request message to a policy control network element, where the policy authorization request message includes a second identifier of a remote terminal device, and the remote terminal device is a terminal device that accesses a network via another terminal device.

The second identifier of the remote terminal device is used to determine a first identifier of the remote terminal device, the identifier of the remote terminal device is used to obtain subscription data of the remote terminal device, the subscription data of the remote terminal device is used to determine a second quality of service QoS rule, and the second QoS rule is a QoS rule corresponding to a second communication interface between a relay device and the remote terminal device.

With reference to the tenth aspect, in some implementations of the tenth aspect, before the processing unit determines the policy authorization request message, the apparatus further includes:
the sending unit, configured to send a subscription message to the policy control network element, where the subscription message is used to subscribe to information indicating whether the remote terminal device goes online; and
a receiving unit, configured to receive a notification message from the policy control network element, where the notification message indicates that the remote terminal device goes online.

Alternatively, the apparatus further includes:
a query unit, configured to obtain information about the policy control network element through a query request message.

With reference to the tenth aspect, in some implementations of the tenth aspect, that the processing unit determines the policy authorization request message includes: The processing unit determines the policy authorization request message based on the first identifier and a service identifier, where the service identifier identifies a service type, and the first identifier and the service identifier are carried in the notification message, or the first identifier and the service identifier are obtained by the processing unit through perception via a user plane.

With reference to the tenth aspect, in some implementations of the tenth aspect, the policy authorization request message further includes:
a service identifier and/or a QoS parameter requirement, where the service identifier indicates a service type, and the QoS parameter requirement is used to assist the policy control network element in generating the PCC rule.

With reference to the tenth aspect, in some implementations of the tenth aspect, the service identifier includes at least one of the following information:
a first relay service code relay service code, a second relay service code, an application identifier APP ID, and a proximity-based service application name ProSe APP ID, where
the first relay service code is a relay service code configured for the remote terminal device, and the second relay service code is a relay service code configured for the relay device.

With reference to the tenth aspect, in some implementations of the tenth aspect, the identifier of the remote terminal device includes at least one of the following identifiers:
a generic public subscription identifier GPSI of the remote terminal device, a user identifier user ID allocated by a third party to the remote terminal device, an internet protocol version 6 IPv6 address of the remote terminal device, an IPv6 address prefix of the remote terminal device, and an identifier including an internet protocol version 4 IPv4 address and a transmission control protocol or user datagram protocol TCP/UDP port number that are of the relay device.

Optionally, the service guarantee apparatus may further include a memory. The memory is coupled to the processor, and the processor is configured to implement the function of the application network element in the method described in the second aspect.

In a possible implementation, the memory is configured to store program instructions and data. The memory is coupled to the processor. The processor may invoke and execute the program instructions stored in the memory, to implement the function of the application network element in the method described in the second aspect.

Optionally, the service guarantee apparatus may further include a communication interface, and the communication interface is used by the service guarantee apparatus to communicate with another device. When the service guarantee apparatus is the application network element, the communication interface may be a transceiver, an input/output interface, a circuit, or the like.

In a possible design, the service guarantee apparatus includes a processor and a communication interface.

The processor is configured to run a computer program, to enable the service guarantee apparatus to implement any method described in the second aspect.

The processor communicates with an external device through the communication interface.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to an eleventh aspect, a service guarantee apparatus is provided. The service guarantee apparatus includes a processor, configured to implement a function of the session management network element in the method described in the third aspect.

Specifically, the service guarantee apparatus includes:
a receiving unit, configured to receive a first message from a relay device, where the first message includes an identifier of the remote terminal device; and
a sending unit, configured to send a second message to a policy control network element, where the second message includes a first identifier of the remote terminal device, the first identifier of the remote terminal device is used to obtain subscription data of the remote terminal device, the subscription data of the remote terminal device is used to determine a second quality of service QoS rule, and the second QoS rule is a QoS rule corresponding to a second communication interface between the relay device and the remote terminal device.

With reference to the eleventh aspect, in some implementations of the eleventh aspect, the receiving unit is further configured to receive a policy and charging control PCC rule from the policy control network element, where the PCC rule includes a first QoS parameter of a first communication interface and a second QoS parameter of the second communication interface.

The first communication interface is a communication interface between the relay device and an access network device. The service guarantee apparatus further includes:
a processing unit, configured to: generate, based on the first QoS parameter, a first QoS rule corresponding to the first communication interface, and generate the second QoS rule based on the second QoS parameter.

With reference to the eleventh aspect, in some implementations of the eleventh aspect, the apparatus further includes:
the processing unit, configured to allocate a QoS flow identifier QFI to the PCC rule, where the QFI uniquely identifies a QoS flow flow corresponding to the PCC rule.

The sending unit is further configured to send a third message to the access network device, where the third message includes the QFI, the first QoS rule, and the second QoS rule.

With reference to the eleventh aspect, in some implementations of the eleventh aspect, the identifier of the remote terminal device includes:
a generic public subscription identifier GPSI or a user identifier user ID allocated by a third-party application to the remote terminal device.

With reference to the eleventh aspect, in some implementations of the eleventh aspect, the first message and the second message further include:
a first relay service code relay service code and/or a second relay service code, where the first relay service code or the second relay service code is used to determine the second QoS rule,
the first relay service code is a relay service code configured for the remote terminal device, and the second relay service code is a relay service code configured for the relay device.

With reference to the eleventh aspect, in some implementations of the eleventh aspect, the second message further includes:
an identifier of the relay device and/or internet protocol IP address information of the remote terminal device.

Optionally, the service guarantee apparatus may further include a memory. The memory is coupled to the processor, and the processor is configured to implement the function of the session management network element in the method described in the third aspect.

In a possible implementation, the memory is configured to store program instructions and data. The memory is coupled to the processor. The processor may invoke and execute the program instructions stored in the memory, to implement the function of the session management network element in the method described in the third aspect.

Optionally, the service guarantee apparatus may further include a communication interface, and the communication interface is used by the service guarantee apparatus to communicate with another device. When the service guarantee apparatus is the session management network element, the communication interface may be a transceiver, an input/output interface, a circuit, or the like.

In a possible design, the service guarantee apparatus includes a processor and a communication interface.

The processor communicates with an external device through the communication interface.

The processor is configured to run a computer program, to enable the service guarantee apparatus to implement any method described in the third aspect.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a twelfth aspect, a service guarantee apparatus is provided. The service guarantee apparatus includes a processor, configured to implement a function of the relay device in the method described in the fourth aspect. Specifically, the service guarantee apparatus includes:
a sending unit, configured to send a first message to a session management network element, where the first message includes a first identifier of a remote terminal device;
a receiving unit, configured to receive a second quality of service QoS rule from the session management network element, where the second QoS rule is generated based on subscription data of the remote terminal device corresponding to the first identifier; and
a processing unit, configured to perform a QoS guarantee on a second communication interface between the relay device and the remote terminal device according to the second QoS rule.

With reference to the twelfth aspect, in some implementations of the twelfth aspect, the sending unit is further configured to send the second QoS rule to the remote terminal device.

With reference to the twelfth aspect, in some implementations of the twelfth aspect, the first identifier of the remote terminal device includes:
a generic public subscription identifier GPSI or a user identifier user ID allocated by a third-party application to the remote terminal device.

With reference to the twelfth aspect, in some implementations of the twelfth aspect, the first message further includes:
a first relay service code relay service code and/or a second relay service code, where the first relay service code or the second relay service code is used to determine the second QoS rule,
the first relay service code is a relay service code configured for the remote terminal device, and the second relay service code is a relay service code configured for the relay device.

With reference to the twelfth aspect, in some implementations of the twelfth aspect, the first relay service code and/or the second relay service code are/is associated with session management subscription data of the remote terminal device.

With reference to the twelfth aspect, in some implementations of the twelfth aspect, the receiving unit is further configured to receive a fourth message from the session management network element, where the fourth message includes the session management subscription data of the remote terminal device, and the session management subscription data includes an AMBR of the remote terminal device. The processing unit is further configured to determine an AMBR of a PC5 link between the relay device and the remote terminal device based on the AMBR of the remote terminal device.

Optionally, the service guarantee apparatus may further include a memory. The memory is coupled to the processor, and the processor is configured to implement the function of the relay device in the method described in the fourth aspect.

In a possible implementation, the memory is configured to store program instructions and data. The memory is coupled to the processor. The processor may invoke and execute the program instructions stored in the memory, to implement the function of the relay device in the method described in the fourth aspect.

Optionally, the service guarantee apparatus may further include a communication interface, and the communication interface is used by the service guarantee apparatus to communicate with another device. When the service guarantee apparatus is the relay device, the communication interface may be a transceiver, an input/output interface, a circuit, or the like.

In a possible design, the service guarantee apparatus includes a processor and a communication interface.

The processor is configured to run a computer program, to enable the service guarantee apparatus to implement any method described in the fourth aspect.

The processor communicates with an external device through the communication interface.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a thirteenth aspect, a service guarantee apparatus is provided. The service guarantee apparatus includes a processor, configured to implement a function of the remote terminal device in the method described in the fifth aspect.

Specifically, the service guarantee apparatus includes:
a receiving unit, configured to receive a second quality of service QoS rule from a relay device, where the second QoS rule is generated based on subscription data of the remote terminal device; and
a processing unit, configured to perform a QoS guarantee on a second communication interface between the relay device and the remote terminal device according to the second QoS rule.

Optionally, the service guarantee apparatus may further include a memory. The memory is coupled to the processor, and the processor is configured to implement the function of the remote terminal device in the method described in the fifth aspect.

In a possible implementation, the memory is configured to store program instructions and data. The memory is coupled to the processor. The processor may invoke and execute the program instructions stored in the memory, to implement the function of the remote terminal device in the method described in the fifth aspect.

Optionally, the service guarantee apparatus may further include a communication interface, and the communication interface is used by the service guarantee apparatus to communicate with another device. When the service guarantee apparatus is a remote terminal device, the communication interface may be a transceiver, an input/output interface, a circuit, or the like.

In a possible design, the service guarantee apparatus includes a processor and a communication interface.

The processor communicates with an external device through the communication interface.

The processor is configured to run a computer program, to enable the service guarantee apparatus to implement any method described in the fifth aspect.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a fourteenth aspect, a service guarantee apparatus is provided. The service guarantee apparatus includes a processor, configured to implement a function of the session management network element in the method described in the sixth aspect.

Specifically, the service guarantee apparatus includes:
a receiving unit, configured to obtain session management subscription data of a remote terminal device, where the session management subscription data includes an AMBR of the remote terminal device;
a processing unit, configured to generate a PDR corresponding to the remote terminal device, where the PDR includes a QER, and a maximum bandwidth in the QER is determined based on the AMBR of the remote terminal device; and
a sending unit, configured to send the PDR to a user plane network element.

With reference to the fourteenth aspect, in some implementations of the fourteenth aspect, the sending unit is further configured to send a fourth message to a relay device, where the fourth message includes the AMBR of the remote terminal device.

With reference to the fourteenth aspect, in some implementations of the fourteenth aspect, the AMBR of the remote terminal device includes at least one of the following: a subscribed session AMBR of the remote terminal device, a PC5 interface AMBR of the remote terminal device, and a PC5 link AMBR of the remote terminal device.

With reference to the fourteenth aspect, in some implementations of the fourteenth aspect, the maximum bandwidth in the QER is a smaller one of the subscribed session AMBR of the remote terminal device and the PC5 interface AMBR/PC5 link AMBR of the remote terminal device.

With reference to the fourteenth aspect, in some implementations of the fourteenth aspect, the sending unit is further configured to send a second message to a policy control network element, where the second message includes the session management subscription data. The receiving unit is further configured to receive a session-related policy and/or a policy and charging control PCC rule from the policy control network element, where the session-related policy and/or the PCC rule include/includes a second QoS parameter of a second communication interface, the second communication interface is a communication interface between the relay device and the remote terminal device, the second QoS parameter includes an AMBR available to the remote terminal device, and the maximum bandwidth in the QER is a smaller one of the AMBR of the remote terminal device and the AMBR available to the remote terminal device.

With reference to the fourteenth aspect, in some implementations of the fourteenth aspect, the receiving unit is further configured to: receive a first message from the relay device, where the first message includes a first identifier of the remote terminal device; and obtain the session management subscription data based on the first identifier

With reference to the fourteenth aspect, in some implementations of the fourteenth aspect, the sending unit is further configured to send a second request message to a data management network element/data repository network element, where the second request message is used to request the session management subscription data, and the second request message includes the first identifier. The receiving unit is further configured to receive a second response message from the data management network element/data repository network element, where the second response message includes the session management subscription data.

With reference to the fourteenth aspect, in some implementations of the fourteenth aspect, the second request message further includes first indication information, and the first indication information indicates the remote terminal device to access a network via the relay device.

With reference to the fourteenth aspect, in some implementations of the fourteenth aspect, the sending unit is further configured to send a third request message to a DN-AAA server, where the third request message is used to request the session management subscription data, and the third request message includes the first identifier. The receiving unit is further configured to receive a third response message from the DN-AAA server, where the third response message includes the session management subscription data.

With reference to the fourteenth aspect, in some implementations of the fourteenth aspect, the receiving unit is further configured to receive a first relay service code and/or a second relay service code from the relay device, where the first relay service code and/or the second relay service code are/is associated with the session management subscription data. The sending unit is further configured to send a third request message to a data management network element/data repository network element, where the third request message is used to request the session management subscription data, and the third request message includes the first relay service code and/or the second relay service code. The receiving unit is further configured to receive a third response message from the data management network element/data repository network element, where the third response message includes the session management subscription data.

With reference to the fourteenth aspect, in some implementations of the fourteenth aspect, the receiving unit is further configured to receive a first message from the relay device, where the first message includes the session management subscription data.

Optionally, the service guarantee apparatus may further include a memory. The memory is coupled to the processor, and the processor is configured to implement the function of the session management network element in the method described in the sixth aspect.

In a possible implementation, the memory is configured to store program instructions and data. The memory is coupled to the processor. The processor may invoke and execute the program instructions stored in the memory, to implement the function of the session management network element in the method described in the sixth aspect.

Optionally, the service guarantee apparatus may further include a communication interface, and the communication interface is used by the service guarantee apparatus to communicate with another device. When the service guarantee apparatus is a remote terminal device, the communication interface may be a transceiver, an input/output interface, a circuit, or the like.

In a possible design, the service guarantee apparatus includes a processor and a communication interface.

The processor communicates with an external device through the communication interface.

The processor is configured to run a computer program, to enable the service guarantee apparatus to implement any method described in the sixth aspect.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a fifteenth aspect, a service guarantee apparatus is provided. The service guarantee apparatus includes a processor, configured to implement a function of the user plane network element in the method described in the seventh aspect.

Specifically, the service guarantee apparatus includes:
a receiving unit, configured to receive a PDR from a session management network element, where the PDR corresponds to a remote terminal device, the PDR includes a QER, and a maximum bandwidth in the QER is determined based on an AMBR of the remote terminal device; and
a processing unit, configured to determine, based on the maximum bandwidth in the QER, a rate of sending data to the remote terminal device.

With reference to the fifteenth aspect, in some implementations of the fifteenth aspect, the AMBR of the remote terminal device includes at least one of the following: a subscribed session AMBR of the remote terminal device, a PC5 interface AMBR of the remote terminal device, and a PC5 link AMBR of the remote terminal device.

With reference to the fifteenth aspect, in some implementations of the fifteenth aspect, the maximum bandwidth in the QER is a smaller one of the subscribed session AMBR of the remote terminal device and the PC5 interface AMBR/PC5 link AMBR of the remote terminal device.

Optionally, the service guarantee apparatus may further include a memory. The memory is coupled to the processor, and the processor is configured to implement the function of the user plane network element in the method described in the seventh aspect.

In a possible implementation, the memory is configured to store program instructions and data. The memory is coupled to the processor. The processor may invoke and execute the program instructions stored in the memory, to implement the function of the user plane network element in the method described in the seventh aspect.

Optionally, the service guarantee apparatus may further include a communication interface, and the communication interface is used by the service guarantee apparatus to communicate with another device. When the service guarantee apparatus is a remote terminal device, the communication interface may be a transceiver, an input/output interface, a circuit, or the like.

In a possible design, the service guarantee apparatus includes a processor and a communication interface.

The processor communicates with an external device through the communication interface.

The processor is configured to run a computer program, to enable the service guarantee apparatus to implement any method described in the seventh aspect.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a sixteenth aspect, a relay service code obtaining apparatus is provided. The relay service code obtaining apparatus includes a processor, configured to implement a function of the policy control network element in the method described in the eighth aspect.

Specifically, the relay service code obtaining apparatus includes:
a receiving unit, configured to obtain session management subscription data of a remote terminal device, where the session management subscription data includes an AMBR of the remote terminal device;
a processing unit, configured to determine a relay service code based on the subscription data, where the relay service code is associated with the session management subscription data; and
a sending unit, configured to send the relay service code to the remote terminal device and a relay device. With reference to the sixteenth aspect, in some implementations of the sixteenth aspect, the sending unit is further configured to send the relay service code and second indication information to a data management network element/data repository network element, where the second indication information indicates that the relay service code is associated with the session management subscription data.

With reference to the sixteenth aspect, in some implementations of the sixteenth aspect, the sending unit is further configured to send the session management subscription data to the remote terminal device and the relay device. With reference to the sixteenth aspect, in some implementations of the sixteenth aspect, the AMBR of the remote terminal device includes at least one of the following: a subscribed session AMBR of the remote terminal device, a PC5 interface AMBR of the remote terminal device, and a PC5 link AMBR of the remote terminal device. Optionally, the service guarantee apparatus may further include a memory. The memory is coupled to the processor, and the processor is configured to implement the function of the policy control network element in the method described in the eighth aspect.

In a possible implementation, the memory is configured to store program instructions and data. The memory is coupled to the processor. The processor may invoke and execute the program instructions stored in the memory, to implement the function of the policy control network element in the method described in the eighth aspect.

Optionally, the service guarantee apparatus may further include a communication interface, and the communication interface is used by the service guarantee apparatus to communicate with another device. When the service guarantee apparatus is a remote terminal device, the communication interface may be a transceiver, an input/output interface, a circuit, or the like.

In a possible design, the service guarantee apparatus includes a processor and a communication interface.

The processor communicates with an external device through the communication interface.

The processor is configured to run a computer program, to enable the service guarantee apparatus to implement any method described in the eighth aspect.

It may be understood that the external device may be an object other than the processor, or an object other than the apparatus.

In another possible design, the service guarantee apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a seventeenth aspect, this application provides a computer-readable storage medium. The computer-readable storage medium stores instructions, and when the instructions are run on a computer, the computer is enabled to perform the methods in the foregoing aspects.

According to an eighteenth aspect, this application provides a computer program product including instructions. When the computer program product runs on a computer, the computer is enabled to perform the methods in the foregoing aspects.

According to a nineteenth aspect, a communication system is provided, including the service guarantee apparatus shown in the ninth aspect and the service guarantee apparatus shown in the tenth aspect.

Further, the communication system further includes the service guarantee apparatus shown in the eleventh aspect or the fourteenth aspect.

Further, the communication system further includes the service guarantee apparatus shown in the twelfth aspect and the service guarantee apparatus shown in the thirteenth aspect.

Further, the communication system further includes the service guarantee apparatus shown in the fifteenth aspect. Further, the communication system further includes the relay service code obtaining apparatus shown in the sixteenth aspect.

According to a twentieth aspect, a chip system is provided, and includes a memory and a processor. The memory is configured to store a computer program. The processor is configured to invoke the computer program from the memory and run the computer program, so that a communication device on which the chip system is installed performs the method in any one of the possible implementations of the first aspect to the eighth aspect.

### BRIEF DESCRIPTION OF DRAWINGS

FIG. 1 shows a network architecture to which embodiments of this application is applicable;
FIG. 2 is a schematic diagram of a ProSe relay communication architecture according to this application;
FIG. 3 is a schematic diagram of an architecture defined in a standard in a ProSe relay communication scenario according to this application;
FIG. 4 is a schematic flowchart in which a remote terminal device accesses a network via a relay device;
FIG. 5A and FIG. 5B are a schematic flowchart of a service guarantee method according to an embodiment of this application;
FIG. 6 is a schematic flowchart of another service guarantee method according to an embodiment of this application;
FIG. 7 is a schematic flowchart of still another service guarantee method according to an embodiment of this application;
FIG. 8A and FIG. 8B are a schematic flowchart of yet another service guarantee method according to an embodiment of this application;
FIG. 9A and FIG. 9B are a schematic flowchart of still yet another service guarantee method according to an embodiment of this application;
FIG. 10 is a schematic diagram of a service guarantee apparatus 8000 according to this application;
FIG. 11 is a schematic diagram of a structure of a relay device or a remote terminal device 900 applicable to an embodiment of this application;
FIG. 12 is a schematic diagram of a service guarantee apparatus 1000 according to this application;
FIG. 13 is a schematic diagram of a structure of a session management network element 1100 applicable to an embodiment of this application;
FIG. 14 is a schematic diagram of a service guarantee apparatus 1200 according to this application;
FIG. 15 is a schematic diagram of a structure of a policy control network element 1200 applicable to an embodiment of this application;
FIG. 16 is a schematic diagram of a service guarantee apparatus 1400 according to this application;
FIG. 17 is a schematic diagram of a structure of an application network element 1500 applicable to an embodiment of this application;
FIG. 18 is a schematic diagram of a service guarantee apparatus 1600 according to this application;
FIG. 19 is a schematic diagram of a service guarantee apparatus 1900 according to this application; and
FIG. 20 is a schematic diagram of a structure of a user plane network element 2000 applicable to an embodiment of this application.

### DESCRIPTION OF EMBODIMENTS

The following describes the technical solutions in this application with reference to the accompanying drawings.

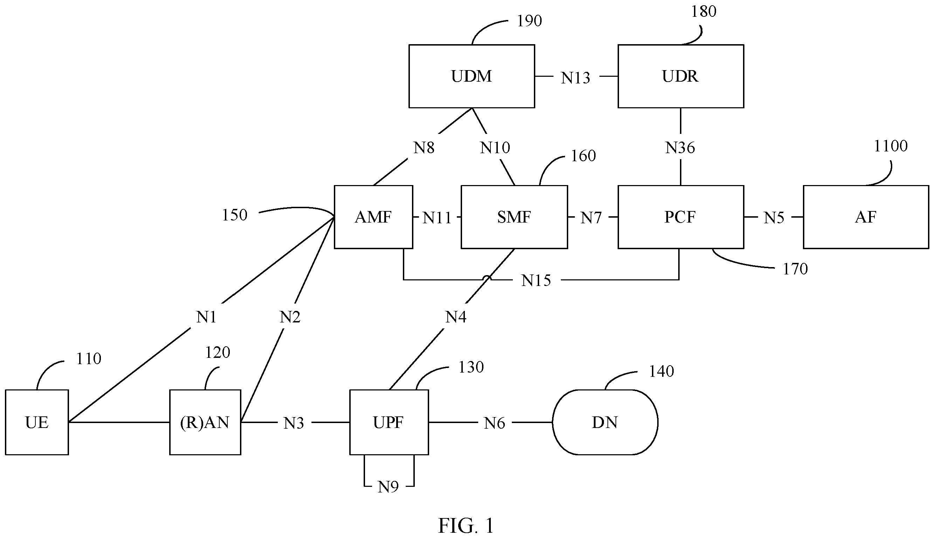

FIG. 1 shows a network architecture to which embodiments of this application is applicable. As shown in FIG. 1, the following separately describes components in the network architecture.
1. User equipment (user equipment, UE) 110 may include various handheld devices having a wireless communication function, vehicle-mounted devices, wearable devices, computing devices, or other processing devices connected to a wireless modem, and various forms of terminals, mobile stations (mobile stations, MSs), terminals (terminals), soft clients, and the like. For example, the UE 110 may be a water meter, an electricity meter, or a sensor.

For example, the user equipment in embodiments of this application may be an access terminal, a subscriber unit, a subscriber station, a mobile station, a relay station, a remote station, a remote terminal, a mobile device, a user terminal (user terminal), terminal equipment (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a future 5G network, user equipment in a future evolved public land mobile network (public land mobile network, PLMN), user equipment in a future internet of vehicles, or the like. This is not limited in embodiments of this application.

By way of example, and not limitation, in embodiments of this application, the wearable device may also be referred to as a wearable smart device, and is a generic term for wearable devices developed by intelligently designing daily wear by using a wearable technology, such as glasses, gloves, watches, clothes, and shoes. The wearable device is a portable device that is directly worn on a body or integrated into clothes or an accessory of a user. The wearable device is not merely a hardware device, but is used to implement a powerful function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with another device such as a smartphone, for example, various smart bands or smart jewelry for monitoring physical signs.

In addition, the user equipment in embodiments of this application may alternatively be user equipment in an internet of things (internet of things, IoT) system. IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrowband, NB) technology. In addition, in embodiments of this application, the user equipment may further include sensors such as a smart printer, a train detector, and a gas station. Main functions include collecting data (some user equipments), receiving control information and downlink data of an access network device, sending an electromagnetic wave, and transmitting uplink data to the access network device.

2. A (radio) access network (radio access network, (R)AN) device 120 is configured to provide a network access function for authorized user equipment in a specific area, and can use transmission tunnels with different quality based on user equipment levels, service requirements, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a centralized unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be an access network device in an access network (radio access network, RAN), or may be an access network device in a core network (core network, CN). This is not limited in this application.

3. A user plane network element 130 is configured to perform functions such as packet routing and forwarding, QoS processing of user plane data, user plane data forwarding, session/flow level-based charging statistics, and bandwidth limitation.

In a 5G communication system, the user plane network element may be a user plane function (user plane function, UPF) network element. In a future communication system, the user plane network element may still be the UPF network element, or may have another name. This is not limited in this application.

4. A data network element 140 is configured to provide a network for data transmission.

In the 5G communication system, the data network element may be a data network (data network, DN) element. In the future communication system, the data network element may still be the DN element, or may have another name. This is not limited in this application.

5. An access management network element 150 is mainly configured to perform mobility management and access management, is responsible for transferring a user policy between user equipment and a policy control function (policy control function, PCF) network element, and the like, and may be configured to implement a function other than session management in mobility management entity (mobility management entity, MME) functions, for example, lawful interception and access authorization/authentication.

In the 5G communication system, the access management network element may be an access and mobility management function (access and mobility management function, AMF). In the future communication system, the access management network element may still be the AMF, or may have another name. This is not limited in this application.

6. A session management network element 160 is mainly configured to: manage a session, allocate and manage an internet protocol (internet protocol, IP) address of user equipment, select an endpoint that can manage a user plane function interface and a policy control and charging function interface, perform downlink data notification, and the like.

In the 5G communication system, the session management network element may be a session management function (session management function, SMF) network element. In the future communication system, the session management network element may still be the SMF network element, or may have another name. This is not limited in this application.

7. A policy control network element 170 is configured to: guide a unified policy framework of network behavior, and provide policy rule information for a control plane function network element (for example, the AMF or SMF network element), and the like.

In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

Specifically, the PCF network element is mainly responsible for policy control functions such as session-level and service flow-level charging, a QoS bandwidth guarantee, mobility management, and a user equipment policy decision. In the network architecture shown in FIG. 1, a PCF connected to the AMF corresponds to an AM PCF (PCF for access and mobility control), and a PCF connected to the SMF corresponds to an SM PCF (PCF for session management). In an actual deployment scenario, the AM PCF and the SM PCF may not be a same PCF entity.

8. A data repository network element 180 is configured to be responsible for an access function of subscription data, policy data, application data and other types of data.

In the 5G communication system, the data repository network element may be a unified data repository (unified data repository, UDR) network element. In the future communication system, the data repository network element may still be the UDR element, or may have another name. This is not limited in this application.

9. A data management network element 190 is configured to process a user equipment identifier, access authentication, perform registration management and mobility management, and the like.

In the 5G communication system, the data management network element may be a unified data management (unified data management, UDM) network element. In the 4G communication system, the data management network element may be a home subscriber server (home subscriber server, HSS) network element. In the future communication system, the unified data management may still be the UDM network element, or may have another name. This is not limited in this application.

10. An application network element 1100 is configured to: transfer a requirement of an application side for a network side, access a network exposure function network element, interact with a policy framework to perform policy control, and the like.

In the 5G communication system, the application network element may be an application function (application function, AF) network element. In the future communication system, the application network element may still be the AF network element, or may have another name. This is not limited in this application. The AF network element mainly transfers the requirement of the application side for the network side, for example, a QoS requirement or user equipment status event subscription.

For example, the AF may be a third-party function entity, or may be an application service (for example, an internet protocol multimedia subsystem (internet protocol multimedia subsystem, IMS) voice call service) deployed by an operator. When interacting with the core network, an application function entity of a third-party application may further perform authorization processing via a network exposure function (network exposure function, NEF) network element. For example, a third-party application function directly sends a request message to a NEF, and the NEF determines whether the AF is allowed to send the request message, and forwards the request message to a corresponding PCF or UDM if verification succeeds.

It should be further understood that FIG. 1 is merely an example, and does not constitute any limitation on the protection scope of this application. A service guarantee method provided in embodiments of this application may further relate to a network element that is not shown in FIG. 1. For example, the service guarantee method provided in embodiments of this application further relates to a network exposure network element. The network exposure network element is configured to: expose a QoS capability, AF influence on traffic routing, and the like.

In the 5G communication system, the network exposure network element may be the foregoing NEF network element. In the future communication system, the network exposure network element may still be the NEF network element, or may have another name. This is not limited in this application.

It may be understood that the network elements or the functions may be network elements in a hardware device, may be software functions running on dedicated hardware, or may be virtualized functions instantiated on a platform (for example, a cloud platform). The network elements or the functions may be implemented by one device, or may be jointly implemented by a plurality of devices, or may be one functional module in one device. This is not specifically limited in embodiments of this application. For ease of description, in this application, an example in which the access management network element is an AMF network element, the network exposure network element is an NEF network element, the session management network element is an SMF network element, the policy control network element is a PCF network element, and the application network element is an AF network element is subsequently used for description.

Further, the AMF network element is referred to as an AMF for short, the NEF network element is referred to as a NEF for short, the SMF network element is referred to as an SMF for short, the PCF network element is referred to as a PCF for short, and the AF network element is referred to as an AF for short. In other words, each AMF may be replaced with an access management network element, each NEF may be replaced with a network exposure network element, each SMF may be replaced with a session management network element, each PCF may be replaced with a policy control network element, and each AF may be replaced with an application network element described below in this application.

For ease of description, in embodiments of this application, an example in which an apparatus is an AMF entity, an SMF entity, a PCF entity, an AF entity, or a NEF entity is used to describe the service guarantee apparatus. For an implementation method in which the service guarantee apparatus is a chip in the AMF entity, a chip in the SMF entity, a chip in the PCF entity, a chip in the AF entity, or a chip in the NEF entity, refer to specific descriptions in which the apparatus is the AMF entity, the SMF entity, the PCF entity, the AF entity, and the NEF entity. Details are not described. In the network architecture shown in FIG. 1, communication interfaces between different network elements are used. Specifically, functions of the interfaces shown in FIG. 1 are described as follows:
1. N7 represents an interface between the PCF and the SMF, and is configured to deliver a protocol data unit (protocol data unit, PDU) session granularity control policy and a service data flow granularity control policy.
2. N15 represents an interface between the PCF and the AMF, and is configured to deliver a user equipment policy and an access control-related policy.
3. N5 represents an interface between the AF and the PCF, and is configured to: deliver an application service request and report a network event.
4. N4 represents an interface between the SMF and the UPF, and is configured to transfer information between a control plane and a user plane, including delivery of a forwarding rule, a QoS control rule, a traffic statistics rule, and the like from the control plane to the user plane, and reporting of user plane information.
5. N11 represents an interface between the SMF and the AMF, and is configured to: transfer PDU session tunnel information between the RAN and the UPF, transfer a control message to be sent to the UE, transfer radio resource control information to be sent to the RAN, and the like.
6. N2 represents an interface between the AMF and the RAN, and is configured to transfer radio bearer control information and the like from a core network side to the RAN.
7. N1 represents an interface between the AMF and the UE, is access-irrelevant, and is configured to transfer the QoS control rule and the like to the UE.
8. N8 represents an interface between the AMF and the UDM, and is used by the AMF to obtain, from the UDM, subscription data and authentication data that are related to access and mobility management, and used by the AMF to register current mobility management-related information of the UE with the UDM.
9. N10 represents an interface between the SMF and the UDM, and is used by the SMF to obtain, from the UDM, subscription data related to session management, and used by the SMF to register current session-related information of the UE with the UDM.
10. N35 represents an interface between the UDM and the UDR, and is used by the UDM to obtain user subscription data information from the UDR.
11. N36 represents an interface between the PCF and the UDR, and is used by the PCF to obtain policy-related subscription data and application data-related information from the UDR.

It should be understood that names of the network elements and the communication interfaces between the network elements in FIG. 1 are briefly described by using an example specified in a current protocol. However, it is not limited that embodiments of this application can be applied only to a currently known communication system. Therefore, standard names used when the current protocol is used as an example for description are all function descriptions. A specific name of a network element, an interface, signaling, or the like is not limited in this application, and only represents a function of the network element, the interface, or the signaling, and may be correspondingly extended to another system, for example, a 2G, 3G, 4G, or future communication system.

It should be further understood that the foregoing network architecture applicable to embodiments of this application shown in FIG. 1 is merely an example for description, and a network architecture applicable to embodiments of this application is not limited thereto. Any network architecture that can implement functions of the foregoing network elements is applicable to embodiments of this application.

For example, in some network architectures, network function network element entities such as an AMF, an SMF network element, a PCF network element, and a UDM network element are all referred to as network function (network function, NF) network elements. Alternatively, in some other network architectures, a set of network elements such as an AMF, an SMF network element, a PCF network element, and a UDM network element may be referred to as a control plane function network element.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future network. The 5G mobile communication system described in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of Things, IoT) communication system, or another communication system.

In embodiments of this application, the user equipment or the access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant communication software. In addition, a specific structure of an entity for performing the method provided in embodiments of this application is not particularly limited in embodiments of this application provided that a program recording code of the method provided in embodiments of this application can be run to perform communication according to the method provided in embodiments of this application. For example, the entity for performing the method provided in embodiments of this application may be the user equipment or the access network device, or may be a functional module capable of invoking and executing the program in the user equipment or the access network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive).

In addition, various storage media described in this specification may represent one or more devices and/or other machine-readable media that are configured to store information. The term "machine-readable storage media" may include but is not limited to a radio channel, and various other media that can store, include, and/or carry instructions and/or data.

Further, the service guarantee method provided in embodiments of this application further relates to ProSe relay communication. It should be understood that, to improve wireless spectrum utilization and provide a cellular network service for a remote terminal device without cellular network coverage, ProSe relay communication is introduced into a cellular communication network. Application scenarios of the ProSe relay communication manner may include scenarios such as signal enhancement at a coverage edge of a base station and relay access to an operator network without coverage.

The signal enhancement at the coverage edge of the base station may be understood as that signal strength cannot meet a high bandwidth requirement of a service due to signal attenuation when a remote terminal device is at the coverage edge of the base station. Therefore, the remote terminal device at the coverage edge of the base station may access a network via a relay device. The relay device in embodiments of this application may be referred to as a ProSe UE-to-NW relay device, indicating a device in a manner in which a remote terminal device accesses a network via a relay device in a proximity-based service (proximity-based services user equipment to network relay, ProSe UE-to-NW Relay). The relay device may alternatively be a terminal device, and therefore may also be referred to as a relay terminal device, which is referred to as a relay device for short below.

The relay access to the operator network without coverage may be understood as that a remote terminal device indirectly accesses a 5G network via a relay device when the remote terminal device is without coverage of the operator network.

In conclusion, in ProSe communication, a communication link (for example, a sidelink (sidelink)) may be directly established between two adjacent user equipments (for example, the remote terminal device and the relay device). It is also considered that communication between the user equipments is implemented through a PC5 interface. In this way, the remote terminal device can access the operator network at the edge of the base station or without network coverage via the relay device.

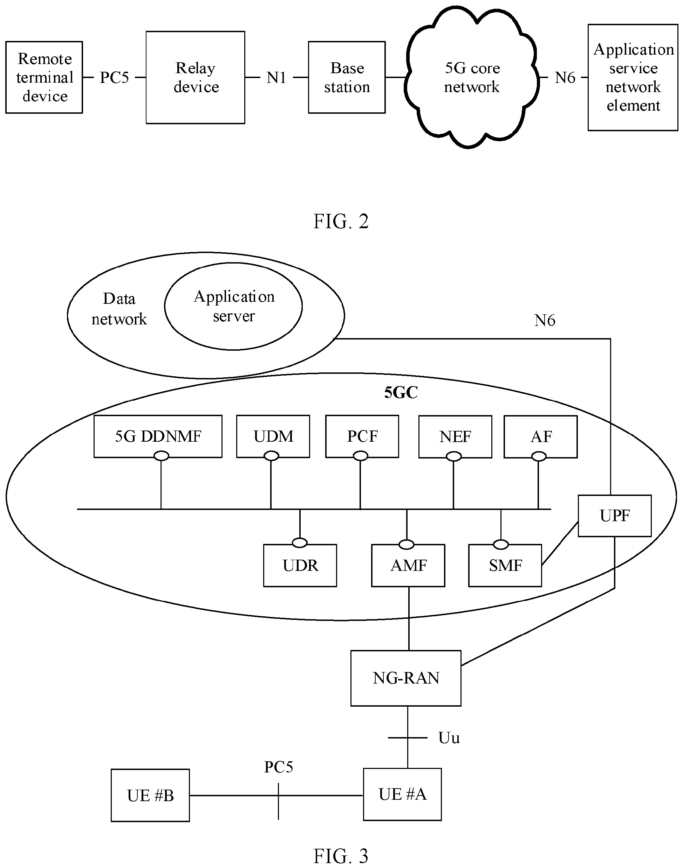

The 3GPP defines, in a 4G communication protocol, a ProSe relay communication architecture used only for public safety. The communication architecture may be extended to support another service besides a public safety service in the 5G network. FIG. 2 is a schematic diagram of a ProSe relay communication architecture according to this application.

It can be learned from FIG. 2 that remote user equipment (remote UE) may access a 5G network via a relay device (ProSe UE-to-NW Relay). Specifically, an access process is as follows:
The remote UE establishes a connection to the relay device through a communication interface (for example, a PC5 interface shown in FIG. 2), the relay device establishes a connection to a base station through a communication interface (for example, an N1 interface shown in FIG. 2), the base station may establish a connection to a core network device, and the core network device establishes a connection to a user application service network element through an interface (for example, an N6 interface shown in FIG. 2). Both the remote UE and the relay device may be understood as user equipment. Therefore, the communication interface between the remote UE and the relay device may be understood as the PC5 interface.

For ease of distinguishing, the remote UE is referred to as a remote terminal device and the ProSe UE-to-NW relay is referred to as a relay device below. In embodiments of this application, the remote terminal device may access a network via the relay device, and establish a packet data unit (packet data unit, PDU) session (session) to ensure normal running of a service.

It should be noted that in embodiments of this application, how the remote terminal device accesses the network via the relay device and establishes the PDU session to ensure normal running of the service is not limited. For details, refer to a specification in a current protocol, or refer to a specification of this procedure in a future protocol. This application mainly relates to how a core network device side configures different QoS guarantees based on different services after the remote terminal device accesses the network via the relay device and establishes the PDU session. FIG. 3 is a schematic diagram of an architecture defined in a standard in a ProSe relay communication scenario according to this application.

A PCF is responsible for providing corresponding authorization information when user equipment accesses a 5G network, for example, information for authorizing whether the user equipment is allowed to access a specific service by using a ProSe function, for specific PLMNs in which the ProSe function is allowed to be enabled, and for a ProSe discovery user equipment identifier (ProSe discovery user identify, PDUID) in a ProSe-restricted scenario. This process may be implemented in a registration procedure of the user equipment. For a specific procedure, refer to a specification that the PCF provides authorization information in a current protocol. This is not limited in this application.

In addition, ProSe relay communication may further relate to a 5G direct discovery name management function (direct discovery name management function, DDNMF) network element. The 5G DDNMF network element is responsible for allocating corresponding relay service code/filter (Relay Service Code/Filter) information to the user equipment after receiving a discovery request from the user equipment. For ease of description, the relay service code/filter information is referred to as a relay service code for short in the following.

Optionally, the 5G DDNMF may alternatively deliver the relay service code to a relay device and a remote terminal device in a static configuration manner, and the relay device and the remote terminal device do not need to actively trigger a ProSe discovery request procedure.

Further, the relay service code allocated by the 5G DDNMF network element to the user equipment enables the user equipment to detect, by using a broadcast message, a connection establishment request sent by another user equipment, and trigger establishment of a communication connection (for example, a PC5 connection) to the another user equipment. In actual deployment, the 5G DDNMF network element may be co-deployed with another network element, for example, co-deployed with a network element such as the PCF, a UDR, or a UDM.

It should be noted that, in this embodiment of this application, how the 5G DDNMF network element allocates the relay service code to the user equipment is not limited, which can refer to a specification in the current protocol. Specific content included in the relay service code is not limited either. For example, the relay service code includes service information, a security policy, and the like.

For example, UE #B shown in FIG. 3 may be understood as remote UE, and UE #A may be understood as a ProSe UE-to-NW relay. For ease of description, in this embodiment of this application, the UE #B is referred to as a remote terminal device, and the UE #A is referred to as a relay device. Before establishing a communication connection (for example, a PC5 connection) to the relay device, the remote terminal device further needs to configure information such as a relay service code required for a ProSe relay service. After the relay device and the remote terminal device complete the foregoing information configuration procedure, a procedure of mutual discovery between the relay device and the remote terminal device may be triggered.

Specifically, the foregoing discovery procedure may be classified into two modes:
Mode 1:
   The relay device performs broadcasting based on a relay service code and related frequency information that are received from the PCF, and the remote terminal device monitors a broadcast signal. After obtains, through monitoring, a relay service code that meets a condition, the remote terminal device may initiate a PC5 connection establishment request. Broadcast information initiated by the relay device in the mode 1 may specifically include:
   (1) a relay device ID: link-layer ID;
   (2) announcer information (Announcer Info): relay device information; and
   (3) a relay service code.
   Specifically, the relay service code may include specific service information and a security policy, and optionally, may further include a list of users that are authorized to perform access, and the like.
Mode 2:
   The remote terminal device performs broadcasting based on a relay service code and related frequency information that are received from the PCF, and the relay device monitors a broadcast signal. After the relay device obtains, through monitoring, a relay service code that meets a condition, the relay device may return a response message to the remote terminal device. In the mode 2, broadcast information initiated by the remote terminal device may specifically include:
   (1) discoverer information (Discoverer Info): remote terminal device information;
   (2) a relay service code: which may include specific service information, a security policy, and optionally, may further include a list of users that are authorized to perform access, and the like; and
   (3) relay device information (optional).

In the mode 2, the response message returned by the relay device may specifically include:
(1) a relay device ID: link-layer ID; and
(2) discoveree information (Discoveree Info): relay device information.

It should be noted that, in a scenario of the mode 1, the remote terminal device may parse the relay service code obtained through monitoring, to determine whether the relay device supports in providing a relay service required by the remote terminal device. In a scenario of the mode 2, the relay device parses the relay service code obtained through monitoring, to determine whether the relay device supports in providing the user equipment with a relay service required by the user equipment.

Optionally, in the foregoing two scenarios, monitor user equipment (monitor UE, for example, the remote terminal device in the mode 1 or the relay device in the mode 2) may alternatively directly determine, based on a locally received relay service code, whether the relay service code obtained through monitoring is available. Specifically, relay service codes configured for the monitor UE and announcer user equipment (announcer UE, for example, the relay device in the mode 1 or the remote terminal device in the mode 2) may be the same or equivalent, or peer information may be obtained by using a specific encryption/decryption algorithm. For example, the monitor UE and the announcer UE correspond to a same application identifier (application ID).

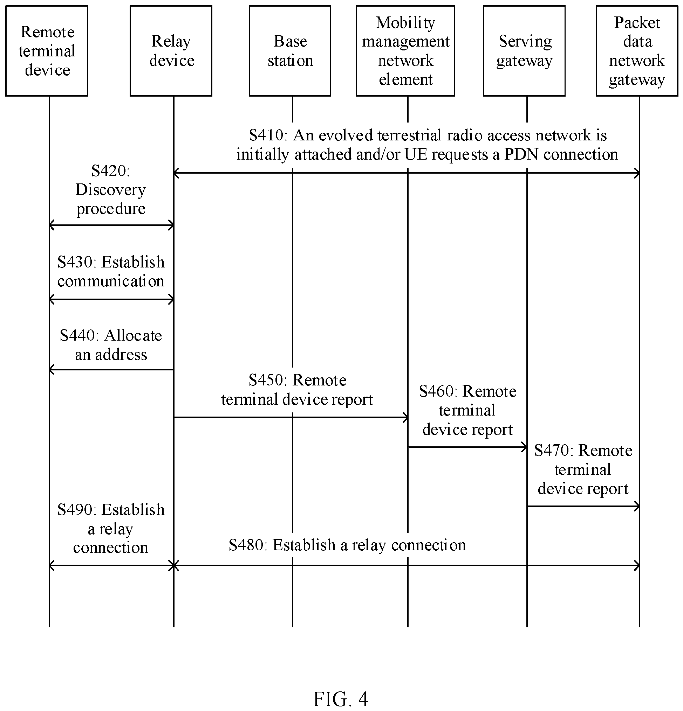

Further, to facilitate understanding of the foregoing procedure in which the remote terminal device accesses the network via the relay device, the following describes the access procedure in detail with reference to FIG. 4. FIG. 4 is a schematic flowchart in which a remote terminal device accesses a network via a relay device.

Execution bodies in FIG. 4 include a remote terminal device (remote UE), a relay device (ProSe UE-to-NW Relay), a base station (evolved NodeB, eNB), a mobility management entity (mobility management entity, MME), a serving gateway (service gateway, S-GW), and a packet data network gateway (packet data network gateway, P-GW).

FIG. 4 is descriptions of a procedure in which the remote terminal device accesses the network via the relay device and that is specified in a 4G protocol. Steps shown in FIG. 4 are not described in detail in this application, and reference may be made to a specification in a current protocol.

For example, S420 may be understood as follows: The remote terminal device or the relay device performs broadcasting or monitoring based on a locally configured relay service code, to establish a communication connection (for example, a PC5 connection).

S430 may be understood as follows: When no packet data network (packet data network, PDN) connection is currently available, the relay device may trigger establishment of a new PDN connection for the remote terminal device.

A main procedure of communication between the remote terminal device and the relay device may be as follows: After the relay device registers with a core network, the relay device and the remote terminal device discover each other (for example, in the foregoing mode 1 and mode 2), and establish a communication connection (for example, a PC5 connection). When the relay device and the remote terminal device establish the connection, to transmit relay data of the remote terminal device, the relay device may request establishment of a PDN connection from a network device. The relay device determines a specific PDN connection for transmitting the relay data. Generally, the relay device may transmit all relay data through a dedicated PDN connection. If a communication address between the relay device and the remote terminal device is an internet protocol (internet protocol, IP) address, the relay device may further allocate an IP address to the remote terminal device, and then the relay device and the remote terminal device may perform service transmission.

Further, the method procedure shown in FIG. 4 further includes S450: The relay device sends a remote terminal device report (remote UE report) to the MME, where the remote terminal device report includes an identifier (for example, a remote UE ID) of the remote terminal device, and the relay device may further allocate IP address information (IP info) to the remote terminal device. After learning of the remote UE report, the MME may forward the remote UE report to the P-GW, so that the P-GW learns of the remote UE ID and the IP info. The remote UE ID and the IP info are used by a PCF to perform a policy decision, to establish a relay connection.

In a ProSe relay communication solution related to public safety in a current 4G protocol, relay service codes are defined as a peer configuration parameter on a remote terminal device and a relay device. The remote terminal device and the relay device discover each other based on the relay service codes configured for each other.

With reference to FIG. 1 to FIG. 4, the foregoing describes in detail the schematic diagram of the network architecture to which embodiments of this application can be applied, and ProSe relay communication in embodiments of this application.

It can be learned from the foregoing descriptions that in the ProSe relay solution defined in 4G, because the ProSe relay solution is used only for the public safety service, the communication connection (for example, the PC5 connection) established between the remote terminal device and the relay device only needs to support a QoS guarantee performed based on the public safety service. However, in a currently discussed ProSe relay scenario, the remote terminal device may access a plurality of services via the relay device. For example, a VR headset accesses a VR service by accessing a 5GC via the relay device, and this is not limited to a public safety scenario. In a current procedure, the 5GC may not perceive a specific initiated service in a session establishment procedure. Therefore, a determined QoS rule may not meet a quality of service guarantee actually required for the service.

In addition, when the remote terminal device currently initiates a service via the relay device, a PDU session established by the relay device for the service is based on a QoS rule received by the relay device, that is, in this case, a rule such as a QoS rule determined based on the service is a rule configured by a core network device based on information such as subscription information of the relay device and current area network load. For the remote terminal device, the remote terminal device may enable a corresponding value-added service or subscribe to a value-added package, so that an operator may configure a QoS rule with higher quality of service for the remote terminal device, for example, a higher bandwidth or a higher scheduling priority. If the existing solution is used, the PDU session established through triggering of the relay device for the remote terminal device does not meet subscription of the remote terminal device. Certainly, a quality of service guarantee subscribed to by the relay device may exceed a quality of service guarantee subscribed to by the remote terminal device.

To resolve a disadvantage that exists when the 4G protocol specifies that the remote terminal device initiates the service via the relay device, this application provides a service guarantee method. A core network device side perceives a specific service initiated by the remote terminal device, and provides a quality of service guarantee that meets an actual service requirement, to improve performance of accessing different services by the remote terminal device via the relay device.

It should be understood that the method provided in embodiments of this application may be applied to a 5G communication system, for example, a communication system shown in FIG. 1.

A specific structure of an execution body of a method provided in embodiments of this application is not particularly limited in the following embodiments provided that a program that records code for the method provided in embodiments of this application can be run to perform communication according to the method provided in embodiments of this application. For example, the method provided in embodiments of this application may be performed by the terminal device, the core network device, or a functional module that is in the terminal device or the core network device and that can invoke and execute the program.

Without loss of generality, the following describes in detail the service guarantee method provided in embodiments of this application by using interaction between the terminal device or the core network device as an example.

For ease of understanding embodiments of this application, the following descriptions are provided.

First, in this application, "indicate" may include "directly indicate" and "indirectly indicate". When a piece of indication information is described as indicating A, the indication information may directly indicate A or indirectly indicate A, but it does not necessarily indicate that the indication information carries A.

The information indicated by the indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. The to-be-indicated information may alternatively be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be further identified and indicated in a unified manner, to reduce indication overheads caused by separately indicating same information.

Second, "first", "second", and various numerical numbers (for example, "#1", and "#2") shown in this application are merely for ease of description, and are used to distinguish between objects, but are not intended to limit the scope of embodiments of this application, for example, are used to distinguish between different messages, but are not used to describe a particular order or sequence. It should be understood that the objects described in this way are interchangeable in a proper circumstance, so that a solution other than embodiments of this application can be described.

Third, "Storage" in embodiments of this application may be storage in one or more memories. The one or more memories may be separately disposed, or may be integrated into an encoder, a decoder, a processor, or a communication apparatus. Alternatively, a part of the one or more memories may be separately disposed, and the other part of the one or more memories are integrated into the decoder, the processor, or the communication apparatus. A type of the memory may be a storage medium in any form, and this is not limited in this application.

Fourth, "protocols" in embodiments of this application may be standard protocols in the communication field, for example, may include a 5G protocol, a new radio (new radio, NR) protocol, and a related protocol used for a future communication system. This is not limited in this application.

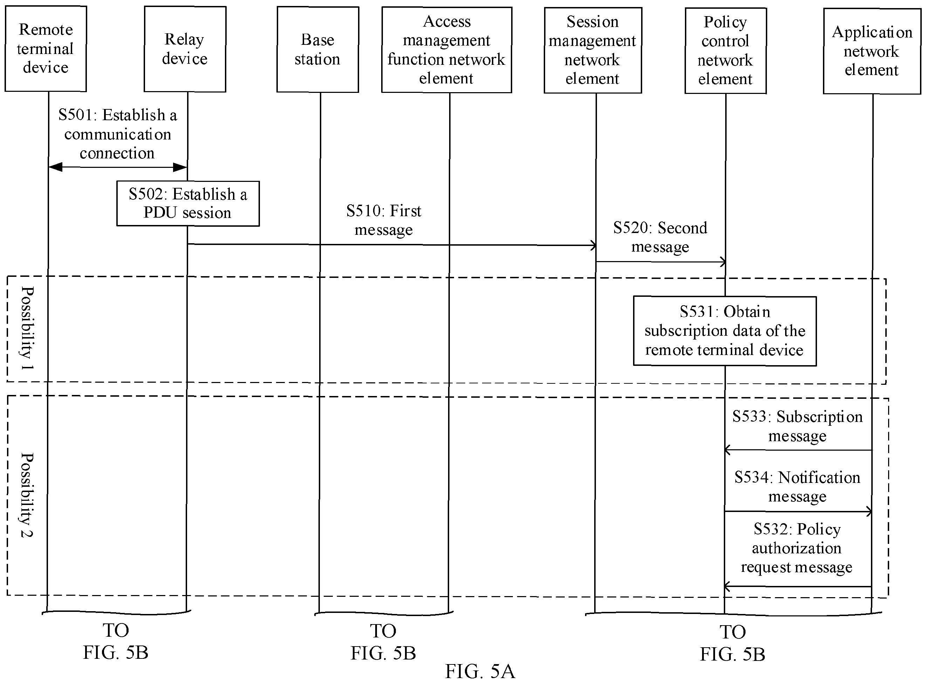

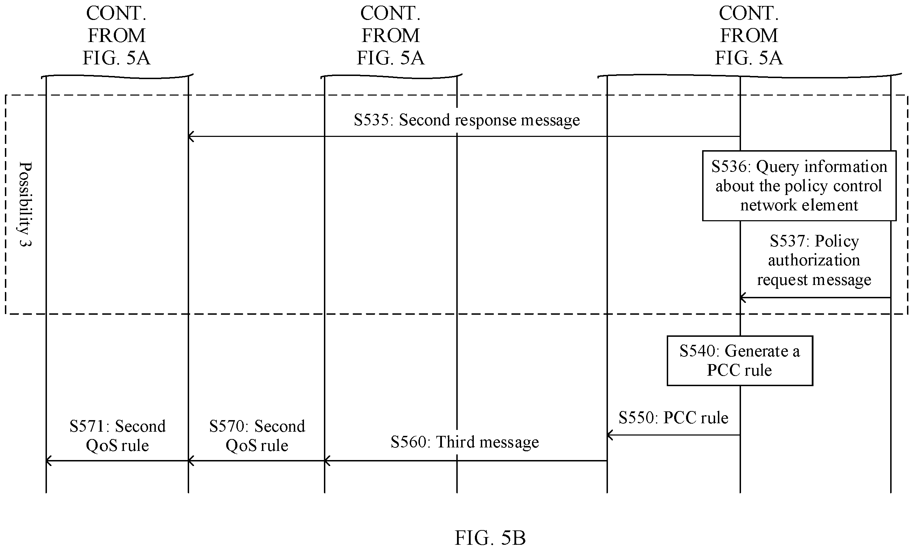

FIG. 5A and FIG. 5B are a schematic flowchart of a service guarantee method according to an embodiment of this application. The service guarantee method includes at least some of the following steps.

S501: Establish a communication connection between a remote terminal device and a relay device.

For example, in this embodiment of this application, both the remote terminal device and the relay device are terminal devices. In this case, the communication connection established between the remote terminal device and the relay device may be understood as a PC5 connection or a sidelink connection.

It should be noted that in this embodiment of this application, how to establish the communication connection between the remote terminal device and the relay device is not limited. For example, in a ProSe relay communication solution specified in a current protocol, the remote terminal device may be located at an edge of a base station, or the remote terminal device may be located in an area without network coverage, and the remote terminal device needs to access an operator network via the relay device.

A specific procedure of establishing the communication connection between the remote terminal device and the relay device is not described in this embodiment of this application. For details, refer to a related specification in the current protocol that the remote terminal device accesses a network via the relay device.

S502: Establish a PDU session between the relay device and a data network (data network, DN).

The relay device may establish the PDU session to the DN via a user plane device (for example, a UPF). The PDU session in this application is mainly a user-plane link between the relay device and the DN, and is for transmitting service data.

It should be understood that service data of the remote terminal device needs to be transmitted through relaying via the relay device, service data of the relay device also needs to be transmitted via the relay device, and the service data needs to be transmitted through the PDU session to ensure normal running of a service. Therefore, a PDU session needs to be established between the relay device and a policy control network element, to ensure the normal running of the service.

It should be noted that a specific procedure of establishing the PDU session between the relay device and the data network is not limited in this embodiment of this application. For details, refer to a specification of a procedure of establishing the PDU session between the relay device and the data network in the current protocol. Details are not described in this embodiment of this application.

Specifically, after the PDU session is established between the relay device and the data network, the policy control network element in this embodiment of this application may perform a policy decision, to provide a better QoS guarantee for a service actually accessed by the remote terminal device.

In a 5G communication system, the policy control network element may be a PCF. In a future communication system, the policy control network element may still be the PCF network element, or may have another name. A name of the policy control network element is not limited in this application, and any network element that can provide policy rule information for a control plane function network element may be understood as the policy control network element. To enable the policy control network element to provide the better QoS guarantee for the service actually accessed by the remote terminal device in a policy decision process, the method procedure shown in FIG. 5A and FIG. 5B further includes the following steps.

S5 10: The relay device sends a first message to a session management network element.

The session management network element is used for session management.

In the 5G communication system, the session management network element may be an SMF network element. In the future communication system, the session management network element may still be the SMF network element, or may have another name. A name of the session management network element is not limited in this application, and any network element that can implement session management and IP address allocation and management of user equipment may be understood as the session management network element.

The first message includes a first identifier (remote UE ID) of the remote terminal device.

Further, the first message further includes IP address information (IP info) allocated by the relay device to the remote terminal device.

The first identifier of the remote terminal device identifies the remote terminal device. The IP information allocated by the relay device to the remote terminal device may be referred to as the IP address information of the remote terminal device, and may indicate a port corresponding to the remote terminal device (for example, a same PDU session carries service data of a plurality of remote terminal devices (a remote terminal device #1 and a remote terminal device #2), IP address information #1 (for example, a port A) corresponds to the remote terminal device #1, and IP address information #2 (for example, a port B) corresponds to the remote terminal device #2).

Optionally, a remote terminal device report (remote UE report) message specified in the current protocol may be reused for the first message, the first message may be other signaling that needs to be sent by the relay device to the session management network element and that is specified in the current protocol, the first message may be newly added signaling between the relay device and the session management network element, or the like. It may be understood that when existing signaling that needs to be sent by the relay device to the session management network element is reused for the first message, signaling overheads can be reduced.

For example, the first identifier of the remote terminal device may be a generic public subscription identifier (generic public subscription identity, GPSI), a user identifier (user identifier, user ID) allocated by a third-party application to the remote terminal device, for example, account name information of the remote terminal device in the third-party application, or a unique subscription permanent identifier (subscription permanent identifier, SUPI) of the remote terminal device.

It should be understood that the GPSI, the user ID, and the SUPI are merely examples, and constitute no limitation on the protection scope of this application. A specific representation form of the first identifier of the remote terminal device is not limited in this embodiment of this application, and any information that can identify the remote terminal device falls within the protection scope of this application.

Optionally, the first message may further include a first relay service code configured for the remote terminal device and/or a second relay service code configured for the relay device, and both the first relay service code and the second relay service code may correspond to a same proximity-based service application ProSe Application. It may be understood as that the first relay service code corresponds to the second relay service code. To be specific, if the first message needs to carry a relay service code, at least one of the first relay service code and the second relay service code may be carried to determine a service type of a specific service that is currently initiated.

That the first relay service code corresponds to the second relay service code may be understood as that the first relay service code is the same as the second relay service code, the first relay service code is equivalent to the second relay service code, the first relay service code and the second relay service code may be used to obtain peer information by using a specific encryption or decryption algorithm, or the like.

In addition, it should be understood that in this embodiment of this application, that the relay device sends a first message to a session management network element includes:
First, the relay device sends the first message to an access network device.

Next, after receiving the first message, the access network device forwards the first message to an access management function network element.

Then, the access management function network element forwards the received first message to the session management network element.

A function of the access network device and the access management function network element in a first message transmission process may be understood as transparently transmitting the first message. Therefore, in this embodiment of this application, the first message transmission process is simply described as that the relay device sends the first message to the session management network element.

In the 5G communication system, the access management network element may be an AMF. In the future communication system, the access management network element may still be the AMF, or may have another name. A name of the access management network element is not limited in this application, and any network element that can transmit a user policy between the user equipment and the PCF network element may be understood as the access management network element. Further, after receiving the first message, the session management network element needs to send, to the policy control network element, the first identifier and the IP address information of the remote terminal device that are included in the received first message, and the relay service code that may be included in the received first message. That is, the method procedure shown in FIG. 5A and FIG. 5B further includes S520: The session management network element sends a second message to the policy control network element.

The second message includes the first identifier of the remote terminal device. For a specific representation form of the first identifier of the remote terminal device, refer to the first identifier of the remote terminal device carried in the first message. Details are not described herein again.

Optionally, the second message may further include an identifier of the relay device, for example, a SUPI or a GPSI of the relay device.

Optionally, the second message may further include the IP address information allocated by the relay device to the remote terminal device.

Optionally, when the first message carries the first relay service code, the second message may further include the first relay service code. Similarly, when the first message carries the second relay service code, the second message may further include the second relay service code.

It should be noted that, when the second message includes the first relay service code and/or the second relay service code, the policy control network element can determine a service type of a currently initiated service after receiving the second message. For example, the policy control network element determines, based on the first relay service code and/or the second relay service code, that the currently initiated service is a video service, an audio service, or a VR service.

Optionally, a session management association policy creation or update (session management policy association create/update) request message specified in the current protocol may be reused for the second message, or the second message may be other signaling that needs to be sent by the session management network element to the policy control network element and that is specified in the current protocol.

In this embodiment of this application, after the policy control network element receives the second message, a subsequent execution step includes the following several possibilities.

Possibility 1: After receiving the second message, the policy control network element can obtain subscription data of the remote terminal device based on an information element carried in the second message. In the possibility 1, the method procedure shown in FIG. 5A and FIG. 5B further includes S531: The policy control network element obtains the subscription data of the remote terminal device.

A procedure of obtaining the subscription data of the remote terminal device specifically includes:
The policy control network element obtains the subscription data of the remote terminal device from a UDR network element based on the first identifier of the remote terminal device in the second message.

Further, in the possibility 1, if the second message carries the first relay service code and/or the second relay service code, the policy control network element can determine the service type of the currently initiated service based on a local configuration of the policy control network element and the first relay service code and/or the second relay service code.

The local configuration of the policy control network element may be a mapping relationship between a service type and a part or all of information included in a relay service code (for example, the first relay service code or the second relay service code). That is, the policy control network element can determine the service type of the currently initiated service on the premise that the relay service code and the mapping relationship between the information in the relay service code and the service type are known.

Optionally, in the possibility 1, that the policy control network element can determine the service type of the currently initiated service may alternatively be as follows: After performing signaling exchange with a 5G DDNMF network element, the policy control network element obtains, through parsing, a mapping relationship between the first relay service code and/or the second relay service code and a service, so that the policy control network element can determine the type of the currently initiated service based on the first relay service code and/or the second relay service code.

Signaling exchange between the policy control network element and the 5G DDNMF in this embodiment of this application may include:
The policy control network element sends a query request message to the 5G DDNMF, where the query request message carries a relay service code (for example, the first relay service code and/or the second relay service code). After receiving the query request message, the 5G DDNMF determines the service type of the currently initiated service based on the relay service code carried in the query request message, includes information related to the determined service type in a query response message, and sends the query response message to the policy control network element, so that the policy control network element can determine the service type of the currently initiated service.

Optionally, the query request message may further carry the first identifier of the remote terminal device and/or the identifier of the relay device.

Possibility 2: After the policy control network element receives the second message, when the first identifier of the remote terminal device included in the second message is the user ID, the policy control network element can interact with an application network element based on the user ID, to determine a QoS guarantee required for the currently initiated service. In the possibility 2, the method procedure shown in FIG. 5A and FIG. 5B further includes S532: The policy control network element receives a policy authorization request message sent by the application network element.

It should be noted that when the first identifier of the remote terminal device included in the second message is allocated by the third-party application, the policy control network element cannot obtain, based on the first identifier of the remote terminal device, the subscription data corresponding to the remote terminal device. Therefore, in this case, the policy control network element may perform signaling exchange with the application network element to determine an actual first identifier of the remote terminal device (for example, the SUPI or the GPSI of the remote terminal device).

Signaling exchange between the policy control network element and the application network element may be implemented via a network exposure network element.

In the 5G communication system, the application network element may be an AF network element. In the future communication system, the application network element may still be the AF network element, or may have another name. A name of the application network element is not limited in this application, and any network element that can transfer a requirement of an application side for a network side may be understood as the application network element. The policy authorization request message includes a service identifier, a second identifier of the remote terminal device, and a QoS parameter requirement.

For example, the service identifier may be an APP ID, or the service identifier may be a ProSe APP ID, where the ProSe APP ID is an APP ID corresponding to a ProSe service. The APP ID is an APP name, may be specifically understood as a unified application name configured between the application network element and the policy control network element, and identifies a specific application corresponding to an application network element that currently initiates a request.

The ProSe APP ID is an application name corresponding to a proximity-based service, may be specifically understood as a unified application name configured on the remote terminal device, the application network element, and the policy control network element, and identifies a specific application corresponding to a currently initiated proximity-based service.

For example, the service identifier may alternatively be the first relay service code and/or the second relay service code.

The second identifier of the remote terminal device included in the policy authorization request message includes at least one of the following identifiers:
the GPSI of the remote terminal device, the user ID allocated by the third-party application to the remote terminal device, an internet protocol version 6 (Internet Protocol Version 6, IPv6) address of the remote terminal device, an IPv6 address prefix (prefix) of the remote terminal device, and an identifier including an internet protocol version 4 (Internet Protocol Version 4, IPv4) address and a transmission control protocol (transmission control protocol, TCP) or user datagram protocol (user datagram protocol, UDP) port number (port number) that are of the relay device. It should be noted that a reason that a specific form of the second identifier of the remote terminal device included in the policy authorization request message may be any one of the IPv6 address of the remote terminal device, the IPv6 address prefix of the remote terminal device, and the identifier including the IPv4 address and the TCP/UDP port number that are of the relay device is as follows:
The second message received by the policy control network element from the session management network element includes the first identifier (for example, the GPSI of the remote terminal device, or the user ID allocated by the third-party application to the remote terminal device) and the IP address information of the remote terminal device. In this case, when the policy authorization request message received by the policy control network element from the application network element includes the IP address information, it may be understood as that the policy authorization request message corresponds to the remote terminal device corresponding to the first identifier of the remote terminal device, and therefore, a specific representation form of the second identifier of the remote terminal device carried in the policy authorization request message may be the IP address information.

When the second identifier of the remote terminal device carried in the policy authorization request message is the IP address information, there is a one-to-one correspondence between the IP address information and the IP address information that is carried in the second message. That is, if the IP address information carried in the second message is the IPv6 prefix, the second identifier of the remote terminal device carried in the policy authorization request message is the IPv6 prefix. If the IP address information carried in the second message is the TCP/UDP port number, the second identifier of the remote terminal device carried in the policy authorization request message is the identifier including the IPv4 of the relay device and the TCP/UDM port number

The QoS parameter requirement included in the policy authorization request message is optional, indicates a QoS guarantee required for a current service, and is used as input information for the policy control network element to perform the policy decision, to assist the policy control network element in performing the policy decision. The QoS parameter requirement may include information such as a bandwidth guarantee and a scheduling priority that correspond to a service.

It should be noted that, in the possibility 2, the premise on which the policy control network element can interact with the application network element to determine the QoS guarantee required for the currently initiated service is as follows: The application network element subscribes to a remote terminal device go-online event. In this case, before S532 is performed in the possibility 2, the method procedure shown in FIG. 5A and FIG. 5B further includes: The application network element subscribes to the remote terminal device go-online event.

A procedure in which the application network element subscribes to the remote terminal device go-online event specifically includes the following step.

S533: The application network element sends a subscription message to the policy control network element, where the subscription message is used to subscribe to information indicating the remote terminal device go-online event. The subscription message includes a service identifier and a notification uniform resource identifier (notification uniform resource identify, Notification URI) used by the application network element for receiving. The notification URI may be understood as information about an address used by the application network element to receive an event report, and indicates a destination for receiving event report information from the policy control network element. The service identifier is used by the policy control network element to perform capability verification, match an event, and determine whether the event needs to be reported to the application network element.

For a specific form of the service identifier carried in the subscription message, refer to the service identifier included in the policy authorization request message sent by the application network element in step S532. Details are not described herein again.

Optionally, the remote terminal device go-online event subscribed to by the application network element may be identified by an event identifier (event ID), that is, the subscription message carries the event ID, the service identifier, and the event notification address notification URI.

It should be noted that, that the application network element sends a subscription message to the policy control network element means that the application network element sends the subscription message to the policy control network element via the network exposure function network element. The network exposure function network element performs transparent transmission, and therefore may be briefly described as that the application network element sends the subscription message to the policy control network element.

Further, after receiving the subscription message, the policy control network element needs to send a subscription response message to the application network element via the network exposure function network element, to respond to whether the subscription of the application network element succeeds.

When the application network element subscribes to the remote terminal device go-online event, a procedure in which the policy control network element performs signaling exchange with the application network element specifically includes the following step.

S534: The policy control network element sends a notification message to the application network element, where the notification message is used to notify the remote terminal device go-online event. The notification message carries the first identifier of the remote terminal device and the service identifier, and the service identifier identifies the service type of the currently initiated service.

After receiving the notification message, the application network element needs to send a notification response message to the policy control network element, to respond to whether the notification message sent by the policy control network element succeeds.

In a possible implementation, the policy authorization request message sent by the application network element to the policy control network element is carried in the notification response message, that is, the notification response message and the policy authorization request message are delivered to the policy control network element through a same message

In another possible implementation, the application network element separately sends the policy authorization request message and the notification response message to the policy control network element.

In this embodiment of this application, a sequence of sending the policy authorization request message and the notification response message is not limited, and whether the policy authorization request message and the notification response message are sent through the same message is not limited either.

It should be noted that the possible 1 and the possible 2 may be simultaneously performed.

Possibility 3: After receiving the second message, the policy control network element sends a second response message to the relay device, where the second response message indicates a PDU session establishment or update response. In this case, in the possibility 3, the method procedure shown in FIG. 5A and FIG. 5B further includes S535: The policy control network element sends the second response message to the relay device.

In this embodiment of this application, how the policy control network element returns the second response message after receiving the second message is not limited. It is understood that for performing a regular session establishment procedure, refer to a response made by the policy control network element after receiving the second message in the current protocol.

That the policy control network element sends the second response message to the relay device includes:
First, the policy control network element sends the second response message to the session management network element.

Next, after receiving the second response message, the session management network element forwards the second response message to the access network device.

Then, after receiving the second response message, the access network device forwards the second response message to the relay device.

A function of the access network device and the session management network element in a process of transmitting the second response message may be understood as transparently transmitting the second response message. Therefore, in this embodiment of this application, the process of transmitting the second response message is simply described as that the policy control network element sends the second response message to the relay device.

In the possibility 3, the application network element may learn of, through policy control network element query, the policy control network element that serves a PDU session established in the foregoing procedure. In this case, in the possibility 3, the method procedure shown in FIG. 5A and FIG. 5B further includes S536: The application network element queries information about the policy control network element.

Specifically, the application network element may query, through a BSF based on information such as an IP address and a data network name (data network name, DNN) in a packet sent by the remote terminal device, the information about the policy control network element that serves the PDU session.

It should be noted that, in a current ProSe relay scenario, the packet transmitted by the remote terminal device presents the IP address of the relay device to the outside, that is, IP address information carried in a policy control network element information query request initiated by the application network element actually indicates the IP address corresponding to the relay device.

Further, in the possibility 3, the application network element may send a policy authorization request message to the policy control network element based on the queried information about the policy control network element in S536. In this case, in the possibility 3, the method procedure shown in FIG. 5A and FIG. 5B further includes S537: The application network element sends the policy authorization request message to the policy control network element. The policy authorization request message indicates the policy control network element to perform context association, that is, associate the policy authorization request with a service initiated by a specific remote terminal device in a specific PDU session. Specifically, the policy control network element may associate the policy authorization request message with a corresponding user context based on the second identifier of the remote terminal device carried in the policy authorization request message, to perform a policy decision.

A difference between the policy authorization request message sent by the application network element to the policy control network element in the possibility 3 and the policy authorization request message sent by the application network element to the policy control network element in step S532 in the possibility 2 lies in that:
Step S532 in the possibility 2 is initiated by the policy control network element for the remote terminal device go-online event. Therefore, the policy control request message sent by the application network element may not need to carry the second identifier of the remote terminal device, and only needs to deliver information such as the service identifier (for example, a relay service code) and QoS authorization. However, step S537 in the possibility 3 is actively initiated by the application network element. Therefore, the policy control request message sent by the application network element needs to carry the second identifier of the remote terminal device, further needs to carry the service identifier, and optionally carries a QoS parameter requirement.

Information such as the second identifier of the remote terminal device and the service identifier that need to be carried in the policy control request message and the QoS parameter requirement that may be carried in the policy control request message in the possibility 3 is similar to those carried in the policy authorization request message sent by the application network element to the policy control network element in step S532 in the possibility 2, and details are not described herein again.

In addition, it should be noted that in the possibility 3, the application network element may obtain the second identifier of the remote terminal device and the service identifier through a user plane channel. For example, a user plane packet sent by the remote terminal device after the remote terminal device goes online includes the second identifier of the remote terminal device and the service identifier. In this case, the application network element may obtain the second identifier of the remote terminal device and the service identifier through perception via a user plane. How the application network element performs perception via the user plane is not limited in this embodiment of this application. For details, refer to a related specification in the current protocol or a next-generation protocol. Details are not described herein.

Further, after the policy control network element learns of the foregoing service guarantee requirement from the application network element, and/or after the policy control network element learns of the type of the currently initiated service and the subscription data of the remote terminal device, the policy control network element may perform, based on obtained information, a policy decision and generate a policy and charging control (policy charging control, PCC) rule. That is, the method procedure shown in FIG. 5A and FIG. 5B further includes S540: The policy control network element generates the PCC rule.

The PCC rule includes a first QoS parameter of a first communication interface and a second QoS parameter of a second communication interface.

Content included in the first QoS parameter may include a 5G interface QoS identifier (5G QoS Indicator, 5QI), the address resolution protocol (address resolution protocol, ARP), a guaranteed bit rate (guaranteed bit rate, GBR), a maximum bit rate (maximum bit rate, MBR), a session aggregate maximum bit rate (session aggregated maximum bit rate, Session AMBR), and the like.

Content included in the second QoS parameter may include a PC5 interface QoS indicator (PC5 QoS Indicator, PQI), the ARP, the GBR, the MBR, a total maximum bit rate (total maximum bit rate, TMBR), and the like.

The first communication interface is a communication interface (for example, a Uu interface) between the relay device and the access network device, and the second communication interface is a communication interface (for example, a PC5 interface) between the relay device and the remote terminal device.

The first QoS parameter is used to generate a first QoS rule and a first QoS profile, and the second QoS parameter is used to generate a second QoS rule. The first QoS rule and the first QoS profile are QoS rules corresponding to the first communication interface between the relay device and the access network device, and the second QoS rule is a QoS rule corresponding to the second communication interface between the relay device and the remote terminal device.

It should be noted that the first QoS profile mainly includes a quality of service guarantee parameter (for example, may include one or more of parameter information such as the 5QI, the ARP, the AMBR, the GBR, and the MBR) that needs to be provided for a service flow. In addition to a part or all of the foregoing quality of service guarantee parameters, the first QoS rule or the second QoS rule may further include flow description information corresponding to the service flow, where the flow description information is used by the remote terminal device and/or the relay device to perform uplink flow matching, and the flow description information may be determined based on the foregoing IP address information of the remote terminal device.

In addition, it should be noted that QoS information that may be determined by the policy control network element based on the subscription data of the remote terminal device is only a terminal device granularity, and a specific service granularity is not determined. In other words, when a service type is not perceived, parameter information such as a 5QI, the ARP, and a session-AMBR corresponding to a default QoS flow may be determined. Therefore, to enable the policy control network element to determine, for different services, QoS information corresponding to the different services, the second message and/or the policy authorization request message need/needs to carry the service identifier (for example, the first relay service code and/or the second relay service code).

For example, in a process in which the policy control network element performs the policy decision and generates the PCC rule, the policy control network element may determine, based on subscription data corresponding to the relay device and the subscription data corresponding to the remote terminal device, the first QoS parameter and the second QoS parameter that may be used, to avoid violating a subscription policy of the relay device and a subscription policy of the remote terminal device.

In this embodiment of this application, after generating the PCC rule, the policy control network element sends the PCC rule to the session management network element. In this case, the method procedure shown in FIG. 5A and FIG. 5B further includes S550: The policy control network element sends the PCC rule to the session management network element.

After receiving the PCC rule, the session management network element performs QoS flow binding according to the received PCC rule, and associates the PCC rule with a specific QoS flow. The QoS flow is uniquely identified by a QoS flow identifier (QoS Flow Identifier, QFI).

The session management network element may independently allocate a QFI to a QoS flow. The QFI needs to be unique at a PDU session granularity. A main function of the QFI is to uniquely identify a specific QoS flow in a PDU session. Therefore, the relay device, the remote terminal device, and the access network device may identify the QoS flow and perform a QoS guarantee corresponding to the QFI.

Specifically, a manner in which the session management network element generates the first QoS rule, the first QoS profile, and the first QoS rule includes:
determining the first QoS rule, the first QoS profile, and a value of a corresponding information element in the first QoS rule based on the first QoS parameter and the second QoS parameter in the PCC rule, and the flow description information.

The first QoS profile is information provided by the session management network element for the access network device, and mainly includes information related to the first QoS parameter.

The first QoS rule is information provided by the session management network element for the relay device. The second QoS rule is information provided by the session management network element for the remote terminal device. The first QoS rule and the second QoS rule may respectively include a part or all of content of the first QoS parameter and the second QoS parameter, and may further include the flow description information, used to associate a service flow with a specific QoS flow when the relay device and the remote terminal device perform uplink flow matching. The session management network element sends a third message to the access network device. The method procedure shown in FIG. 5A and FIG. 5B further includes S560: The session management network element sends the third message to the access network device, where the third message indicates the access network device to perform resource reservation. A resource includes, for example, a bandwidth resource or a scheduling resource. For a GBR service, the access network device needs to provide a bandwidth guarantee for the GBR service, to prevent user service experience from being affected by another service.

The third message includes the QFI, the first QoS profile, the first QoS rule, and the second QoS rule. Specifically, the relay device, the remote terminal device, or a UPF separately needs to add a QFI label to an uplink/downlink packet header, that is, identify that a service flow belongs to a QoS flow corresponding to the QFI, and the access network device needs to perform, based on the QFI, a QoS profile corresponding to the QoS flow.

Further, after receiving the third message, the access network device performs resource reservation based on the third message, and sends the first QoS rule and the second QoS rule that are included in the third message to the relay device. After receiving the second QoS rule, the relay device may forward the second QoS rule to the remote terminal device through the second communication interface (for example, the PC5 interface) between the relay device and the remote terminal device. In this case, the method procedure shown in FIG. 5A and FIG. 5B further includes the following steps.

S570: The access network device sends the second QoS rule to the relay device. S571: The relay device sends the second QoS rule to the remote terminal device. After receiving the information, the remote terminal device may perform resource reservation for the service, and perform, for the service flow, the quality of service QoS guarantee required by the second QoS rule.

Specifically, the quality of service QoS guarantee performed by the remote terminal device and the relay device may include: performing mapping between an uplink and/or downlink service flow and a QoS flow on a PC5 interface based on service flow information in the second QoS rule, and performing a QoS guarantee policy such as bandwidth control, a scheduling priority, a packet loss rate, and a delay of the uplink and/or downlink service flow on the PC5 interface based on one or more parameters such as the TMBR, the PQI, and the GBR in the second QoS rule.

In the embodiment shown in FIG. 5A and FIG. 5B, related information (for example, the identifier of the remote terminal device) of the remote terminal device and service-related information (for example, the service identifier) are provided for the policy control network element, so that the policy control network element performs a more appropriate policy decision, and quality of service guarantee of a service between the remote terminal device and the relay device is improved.

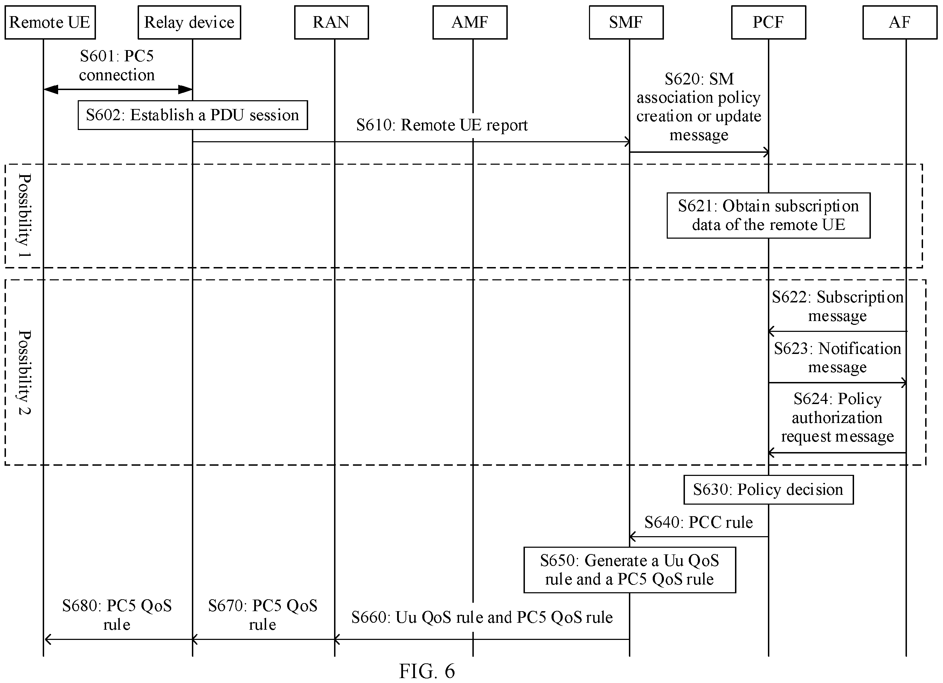

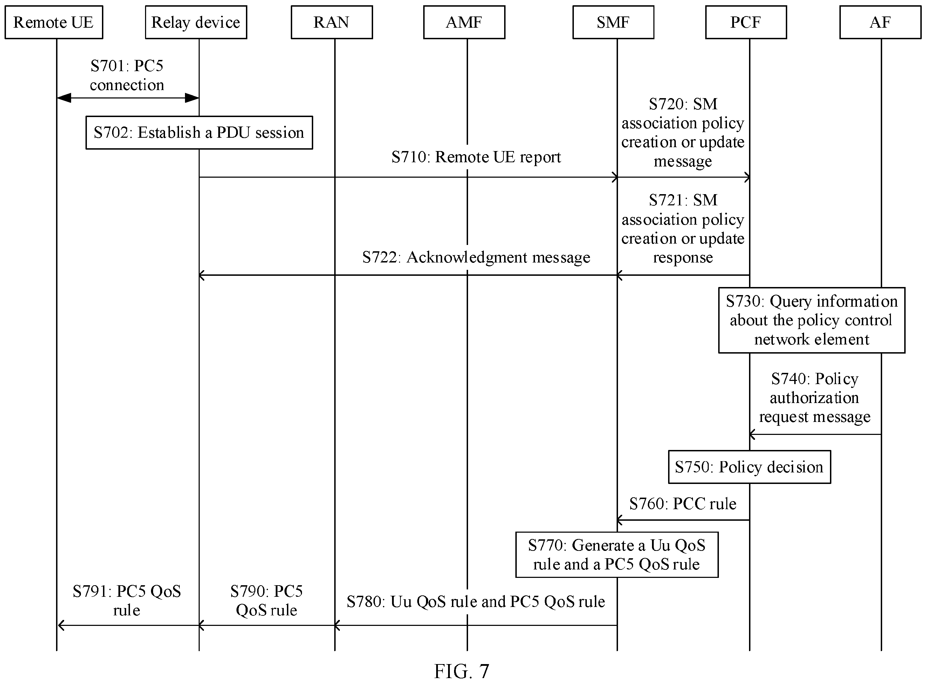

For ease of understanding, the following describes in detail a service guarantee method provided in embodiments of this application with reference to FIG. 6 and FIG. 7.

FIG. 6 is a schematic flowchart of another service guarantee method according to an embodiment of this application. The service guarantee method includes at least some of the following steps.

S601: Establish a PC5 connection between remote (Remote) UE and a relay (Relay) device.

Similar to step S501 in FIG. 5A and FIG. 5B, it may be understood as that both the remote terminal device and the relay device shown in step S501 are terminal devices. Therefore, a communication connection between the remote UE and the relay device is the PC5 connection.

S602: The relay establishes a PDU session.

This step is similar to step S502 in FIG. 5A and FIG. 5B, and details are not described herein again.

S610: The relay sends a remote UE report to an SMF.

In this embodiment, the relay sends the remote UE report (report) to the SMF via a RAN and an AMF. The RAN is an access network device accessed by the relay.

The remote UE report includes a user identifier of the remote UE. The user identifier of the remote UE is the same as the first identifier shown in step S510 in FIG. 5A and FIG. 5B. Details are not described herein again.

Further, the remote UE report may further include IP info allocated by the relay to the remote UE. The IP info is the same as the IP info shown in step S510 in FIG. 5A and FIG. 5B. Details are not described herein again.

Further, the remote UE report may further include a relay service code corresponding to the remote UE and/or a relay service code corresponding to the relay. The relay service code corresponding to the remote UE is the same as the first relay service code shown in step S510 in FIG. 5A and FIG. 5B, and the relay service code corresponding to the relay is the same as the second relay service code shown in step S510 in FIG. 5A and FIG. 5B. Details are not described herein again.

S620: The SMF sends an SM association policy creation or update message to a PCF.

In this embodiment, after receiving the remote UE report, the SMF may send, to the PCF through the SM association policy creation or update message, information carried in the remote UE report.

For example, the user identifier of the remote UE carried in the remote UE report may be sent to the PCF through the SM association policy creation or update message.

Alternatively, when the remote UE report carries the relay service code corresponding to the remote UE and/or the relay service code corresponding to the relay, after receiving the remote UE report, the SMF may send, to the PCF through the SM association policy creation or update message, the relay service code corresponding to the remote UE and/or the relay service code corresponding to the relay that are/is carried in the remote UE report.

Further, the SM association policy creation or update message further carries the user identifier of the relay and the IP info.

In this embodiment, after the PCF receives the SM association policy creation or update message, the following two possibilities are included in a step that can be performed by the PCF based on information carried in the association policy creation or update message.

### Possibility 1:

The method procedure shown in this embodiment further includes S621: The PCF obtains subscription data of the remote UE. For a specific manner of obtaining the subscription data of the remote UE, refer to step S531 in FIG. 5A and FIG. 5B. Details are not described herein again.

### Possibility 2:

The method procedure shown in this embodiment further includes S622: An AF sends a message for subscribing to a remote UE go-online event to the PCF, where the message is referred to as a remote UE subscription message. For a specific subscription procedure, refer to step S533 in FIG. 5A and FIG. 5B. Details are not described herein again.

After receiving the foregoing SM association policy creation or update message, the PCF may perform signaling exchange with the AF, to obtain a QoS guarantee required for a currently initiated service. The method procedure shown in this embodiment further includes the following steps.

S623: The PCF sends, to the AF, a notification message for notifying the remote UE go-online event, where the notification message carries the user identifier of the remote UE and a service identifier of the currently initiated service. For a specific notification manner, refer to step S534 in FIG. 5A and FIG. 5B. Details are not described herein again.

S624: The AF sends a policy authorization request message to the PCF. For specific descriptions of the policy authorization request message, refer to step S532 in FIG. 5A and FIG. 5B. Details are not described herein again.

It should be understood that both the possible 1 and the possible 2 may be performed. In other words, the PCF may obtain the subscription data of the remote UE, and may further receive the policy authorization request message from the AF.

Further, after the foregoing steps are performed, the PCF in this embodiment may perform a policy decision. In other words, the method procedure shown in this embodiment further includes S630: The PCF performs a policy decision. Specifically, for a manner in which the PCF performs the policy decision and generates a PCC rule, refer to step S540 in FIG. 5A and FIG. 5B. Details are not described herein again.

The PCF sends the generated PCC rule to the SMF, and the SMF generates, based on a QoS parameter in the PCC rule, a QoS rule (which may be referred to as a Uu QoS rule for short) corresponding to a Uu interface between the relay and the RAN and a QoS rule (which may be referred to as a PC5 QoS rule for short) corresponding to a PC5 interface between the remote UE and the relay. Further, the SMF sends the Uu QoS rule and the PC5 QoS rule to the RAN, the RAN then sends the PC5 QoS rule to the relay, and the relay sends the PC5 QoS rule to the remote UE. In this case, the method procedure shown in this embodiment further includes the following steps.

S640: The PCF sends the PCC rule to the SMF. S650: The SMF generates the Uu QoS rule and the PC5 QoS rule.

S660: The SMF sends the Uu QoS rule and the PC5 QoS rule to the RAN.

S670: The RAN sends the PC5 QoS rule to the relay.

S680: The relay sends the PC5 QoS rule to the remote UE. Specifically, for S640 to S680, refer to the descriptions of

S540 to S571 in FIG. 5A and FIG. 5B.

FIG. 7 is a schematic flowchart of another service guarantee method according to an embodiment of this application. The service guarantee method includes at least some of the following steps.

S701: Establish a PC5 connection between remote (Remote) UE and a relay (Relay) device.

This step is the same as step S601 in FIG. 6, and details are not described herein again.

S702: The relay establishes a PDU session.

This step is the same as step S602 in FIG. 6, and details are not described herein again.

S710: The relay sends a remote UE report to an SMF.

This step is the same as step S610 in FIG. 6, and details are not described herein again.

S720: The SMF sends an SM association policy creation or update message to a PCF.

This step is the same as step S620 in FIG. 6, and details are not described herein again.

In this embodiment, after receiving the SM association policy creation or update message, the SMF does not obtain subscription data of the remote UE based on the received SM association policy creation or update message or send, to an AF based on the received SM association policy creation or update message, a notification for notifying that the remote UE goes online, but performs a regular policy session establishment procedure to send an SM association policy creation or update response to the SMF, and then the SMF sends an acknowledgment message for acknowledging session establishment to the relay. In this case, the method procedure shown in this embodiment further includes the following steps.

S721: The PCF sends the SM association policy creation or update response to the SMF. S722: The SMF sends the acknowledgment message to the relay.

Further, in this embodiment, the AF may learn of, through PCF query, the PCF that serves the PDU session established in the foregoing procedure. In this case, the method procedure shown in FIG. 7 in this embodiment further includes S730: The AF queries PDU information.

In addition, in this embodiment, the AF may perceive, via a user plane, that the remote UE goes online, and obtain a user identifier of the remote UE and a service identifier of a currently initiated service through perception via the user plane.

After learning of information about the PCF, the user identifier of the remote UE, and the service identifier of the currently initiated service, the AF may send a policy authorization request message to the PCF. In this case, the method procedure shown in FIG. 7 in this embodiment further includes S740: The AF sends the policy authorization request message to the PCF. Specifically, for information included in the policy authorization request message, refer to step S537 in FIG. 5A and FIG. 5B. Details are not described herein again.

Further, after the foregoing steps are performed, the method procedure shown in this embodiment further includes S750: The PCF performs a policy decision. S760: The PCF sends a PCC rule to the SMF. S770: The SMF generates a Uu QoS rule and a PC5 QoS rule. S780: The SMF sends the Uu QoS rule and the PC5 QoS rule to a RAN. S790: The RAN sends the PC5 QoS rule to the relay. S791: The relay sends the PC5 QoS rule to the remote UE. Specifically, for S750 to S791, refer to the descriptions of S540 to S571 in FIG. 5A and FIG. 5B.

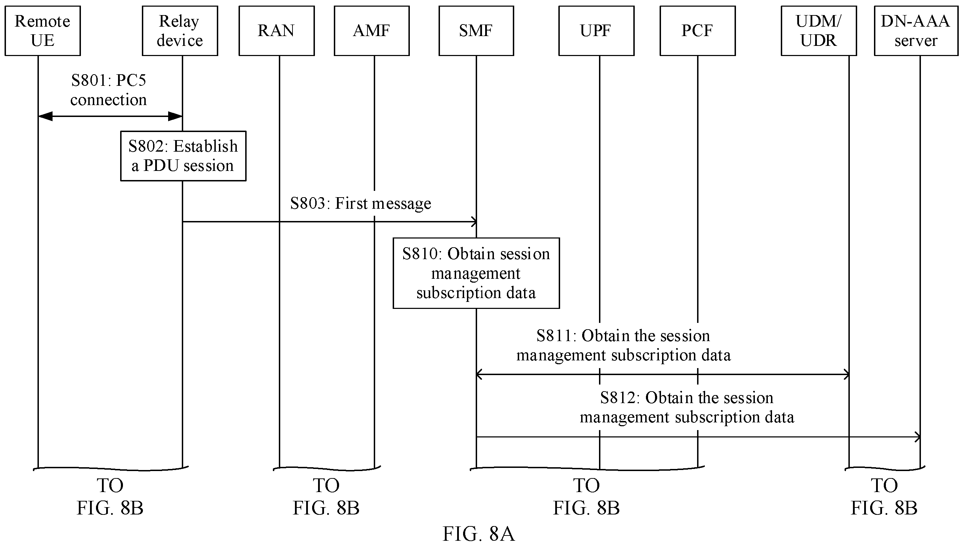

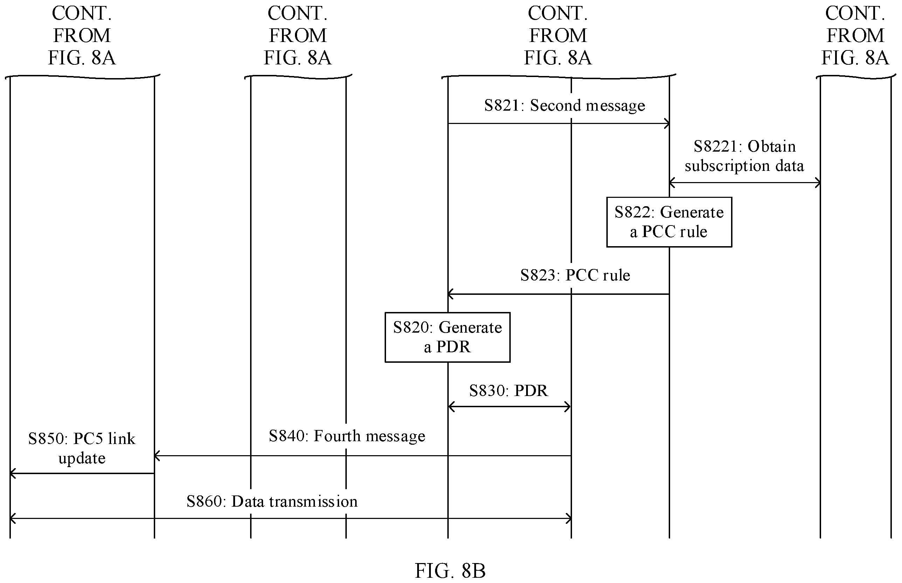

FIG. 8A and FIG. 8B are a schematic flowchart of another service guarantee method according to an embodiment of this application. The service guarantee method includes at least some of the following steps.

S801: Establish a PC5 connection between remote UE (an example of a remote terminal device) and a relay (an example of a relay device).

This step is the same as S501 in FIG. 5A and FIG. 5B, and details are not described herein again.

S802: The relay establishes a PDU session.

This step is the same as S502 in FIG. 5A and FIG. 5B, and details are not described herein again.

S803: The relay sends a first message to an SMF (an example of a session management network element).

This step is the same as S510 in FIG. 5A and FIG. 5B, and details are not described herein again.

To enable the SMF to provide, in a process of establishing a PDR, a maximum bit rate (maximum bit rate, MBR) that better conforms to a bandwidth actually available to the remote UE, the method procedure shown in FIG. 8A and FIG. 8B further includes the following step.

S810: The SMF obtains session management subscription data of the remote UE.

The session management subscription data of the remote UE may include an AMBR of the remote UE. The AMBR of the remote UE may include a subscribed session AMBR of the remote UE. Optionally, the AMBR of the remote UE may further include a PC5 interface AMBR of the remote UE or a PC5 link AMBR of the remote UE.

A method used by the SMF to obtain the session management subscription data of the remote UE is not limited in this embodiment of this application.

In an example, if the SMF pre-stores or pre-configures the session management subscription data of the remote UE, the SMF may obtain the session management subscription data of the remote UE from a local database based on a first identifier.

In another example, if the SMF does not pre-store or pre-configure the session management subscription data of the remote UE, the SMF may request the session management subscription data of the remote UE from a UDMIUDR, or obtain the session management subscription data of the remote UE from a DN-AAA server in a process in which the SMF performs secondary authentication with the DN-AAA server.

For example, S811: The SMF obtains the subscription session management data of the remote UE from the UDM/UDR.

The SMF may send a second request message to the UDM (an example of a data management network element)IUDR (an example of a data repository network element), where the second request message is used to request the session management subscription data of the remote UE, and the second request message includes the first identifier of the remote UE. Further, the UDM/UDR obtains the session management subscription data of the remote UE from the local database based on the first identifier, and sends a second response message to the SMF. The second response message includes the session management subscription data of the remote UE.

For example, a Nudm_SDM_Get request service specified in a current protocol may be reused for the second request message. In other words, the SMF may request the session management subscription data of the remote UE from the UDM through Nudm_SDM_Get signaling.

For another example, Nudm_SDM_Subscribe signaling specified in a current protocol may be alternatively reused for the second request message. In other words, the SMF may subscribe to a session management subscription data update notification of the remote UE from the UDM through the Nudm_SDM_Subscribe signaling.

Optionally, if the UDM does not pre-store the session management subscription data of the remote UE, the UDM may send a request message to the UDR (the example of the data repository network element), to obtain the session management subscription data of the remote UE. For example, the UDM may obtain the session management subscription data of the remote UE from the UDR through Nudr_DM_Query signaling, or the UDM may subscribe to the session management subscription data update notification of the remote UE from the UDR through Nudr_DM_Subscribe signaling.

Optionally, if the first identifier of the remote UE obtained by the SMF from the relay is a SUPI, the second request message sent by the SMF to the UDM/UDR may include the SUPI. Further, the UDM/UDR may feed back, based on the SUPI, session management subscription data corresponding to the SUPI to the SMF. In other words, the second response message sent by the UDM/UDR to the SMF includes the session management subscription data corresponding to the SUPI.

Optionally, if the first identifier of the remote UE obtained by the SMF from the relay is a GPSI or a user identifier (denoted as a third-party identifier) allocated by a third-party application server to the remote UE, the SMF may obtain a SUPI corresponding to the GPSI or the third-party identifier of the remote UE from the UDMIUDR. Further, the SMF sends the second request message including the SUPI of the remote UE obtained from the UDM/UDR to the UDMIUDR, to obtain the session management subscription data of the remote UE.

Optionally, if the first identifier of the remote UE obtained by the SMF from the relay is a GPSI or a third-party identifier, the SMF may send the second request message including the GPSI or the third-party identifier to the UDM/UDR, to obtain the session management subscription data of the remote UE. Further, after receiving the second request message from the SMF, the UDM/UDR may find corresponding SUPI information based on the GPSI or the third-party identifier in the second request message, further obtain, based on the SUPI information, session management subscription data corresponding to the SUPI from the local database, and feed back the session management subscription data corresponding to the SUPI to the SMF. Optionally, the UDM/UDR may further feed back a SUPI corresponding to the GPSI or the third-party identifier of the remote UE to the SMF. In other words, the second response message sent by the UDMIUDR to the SMF may include the SUPI corresponding to the GPSI or the third-party identifier of the remote UE.

Optionally, the second request message may further include first indication information, and the first indication information indicates that the remote UE accesses a network via the relay. For example, if the second request message sent by the SMF to the UDMIUDR further includes a third identifier of the relay, the UDM/UDR cannot distinguish between the remote UE and the relay. Further, the UDMIUDR cannot determine to feed back session management subscription data corresponding to the first identifier to the SMF or feed back session management subscription data corresponding to the third identifier to the SMF. In this case, if the third request message further includes the first indication information, the UDM/UDR may distinguish between the remote UE and the relay based on the first indication information. Further, the UDM/UDR may feed back the session management subscription data corresponding to the first identifier to the SMF, that is, feed back the session management subscription data of the remote UE to the SMF.

For another example, S812: The SMF obtains the session management subscription data of the remote UE from the DN-AAA server.

The SMF may send a third request message to the DN-AAA server, where the third request message is used to request the session management subscription data of the remote UE, and the third request message includes the first identifier of the remote UE. Further, the DN-AAA server obtains the session management subscription data of the remote UE from the local database based on the first identifier, and sends a third response message to the SMF. The third response message includes the session management subscription data of the remote UE.

For still another example, the SMF may obtain the session management subscription data of the remote UE from the PCF.

A method procedure in which the SMF obtains the session management subscription data of the remote UE from the PCF may include S821 to S823.

S821: The SMF sends a second message to the PCF.

For descriptions of sending the second message to the PCF by the SMF, refer to the foregoing descriptions in S520. Optionally, if the SMF first obtains the session management subscription data of the remote UE from the UDM/UDR or the DN-AAA server, the second message may further include the session management subscription data of the remote UE.

S822: The PCF generates a PCC rule and/or a session-related policy.

The PCF may generate the session-related policy and/or the PCC rule based on subscription data corresponding to the remote UE and the relay. The subscription data corresponding to the remote UE and the relay may include policy-related subscription data and session management subscription data.

Optionally, if the PCF does not pre-store or pre-configure subscription data of the remote UE, before S822, the method may further include S8221: The PCF obtains the subscription data of the remote UE from the UDMIUDR.

Specifically, the PCF may send a fourth request message to the UDM/UDR, where the fourth request message is used to request the subscription data of the remote UE, and the fourth request message includes the first identifier of the remote UE. Further, the UDM/UDR feeds back a fourth response message to the PCF, where the fourth response message includes the subscription data of the remote UE.

If the first message received by the PCF includes the session management subscription data of the remote UE, in S8221, the PCF obtains policy-related subscription data of the remote UE from the DDM/UDR. Optionally, the PCF may further obtain the session management subscription data of the remote UE from the DDM/UDR, to verify the session management subscription data included in the second message.

Optionally, the fourth request message may include the first indication information, and the first indication information indicates that the remote UE accesses the network via the relay.

The PCC rule and/or the session-related policy generated by the PCF may include the session management subscription data of the remote UE.

For example, the PCC rule may include a second QoS parameter of a second communication interface, the second communication interface is a communication interface between the remote UE and the relay, and the second QoS parameter may include an AMBR available to the remote UE.

For another example, the session-related policy may include the AMBR available to the remote UE.

The AMBR available to the remote UE is determined based on the session management subscription data of the remote UE. For example, the AMBR available to the remote UE is a smaller one of the subscribed session AMBR of the remote UE and the PC5 interface AMBR/PC5 link AMBR of the remote UE.

For more descriptions of generating the session-related policy and/or the PCC rule by the PCF, refer to the foregoing descriptions in S540.

S823: The PCF sends the session-related policy and/or the PCC rule to the SMF.

After receiving the session-related policy and/or the PCC rule, the SMF obtains the session management subscription data of the remote UE according to the session-related policy and/or the PCC rule.

S820: The SMF generates the PDR.

After obtaining the session management subscription data of the remote UE, the SMF may establish the separate PDR for the remote UE. In other words, the SMF generates the PDR corresponding to the remote UE. The SMF may generate the PDR based on the first identifier of the remote UE. Specifically, the SMF may generate, based on at least one of an IP address, a port number, and a MAC address of the remote UE, the PDR corresponding to the remote UE. The PDR includes a QER, and a maximum bandwidth in the QER is determined based on the AMBR of the remote UE. The maximum bandwidth in the QER may also be referred to as an MBR.

For example, if the AMBR of the remote UE obtained by the SMF is the subscribed session AMBR of the remote UE, the maximum bandwidth in the QER is the subscribed session AMBR of the remote UE.

For another example, if the AMBR of the remote UE obtained by the SMF is the PC5 interface AMBR of the remote UE, the maximum bandwidth in the QER is the PC5 interface AMBR of the remote UE.

For still another example, if the AMBR of the remote UE obtained by the SMF is the PC5 link AMBR of the remote UE, the maximum bandwidth in the QER is the PC5 link AMBR of the remote UE.

For still another example, if the AMBR of the remote UE obtained by the SMF is the subscribed session AMBR of the remote UE and the PC5 interface AMBR/PC5 link AMBR of the remote UE, the maximum bandwidth in the QER is the smaller one of the subscribed session AMBR of the remote UE and the PC5 interface AMBR/PC5 link AMBR of the remote UE, that is, maximum bandwidth in the QER=min(subscribed session AMBR of the remote UE, PC5 interface AMBR/PC5 link AMBR).

For still another example, if the PCC rule and/or the session-related policy that are/is received by the SMF from the PCF (an example of the policy control network element) include/includes the AMBR available to the remote UE, the maximum bandwidth in the QER is a smaller one of the AMBR of the remote UE and the AMBR available to the remote UE.

S830: The SMF sends the PDR to a UPF.

Correspondingly, after receiving the PDR from the SMF, the UPF may send feedback information to the SMF, to indicate that the PDR has been received.

Optionally, the method shown in FIG. 8A and FIG. 8B may further include S840 and S850.

S840: The SMF sends a fourth message to the relay, where the fourth message includes the session management subscription data of the terminal device.

Optionally, the fourth message may include the AMBR of the remote terminal device. When the AMBR of the remote terminal device is different from an AMBR of the relay, the SMF may send the fourth message to the relay. Optionally, the fourth message may include the maximum bandwidth in the QER, in other words, the fourth message includes the MBR. If a QER of the remote UE is different from a subscribed session AMBR of the relay, the SMF sends the fourth message to the relay.

S850: The remote UE and the relay perform PC5 link update.

Specifically, after the relay receives the fourth message from the SMF, the relay and the remote UE adjust the PC5 link AMBR based on the session management subscription data of the remote UE included in the fourth message, that is, update the PC5 link AMBR to the AMBR of the remote UE.

For example, the remote UE and the relay update the PC5 link AMBR to the smaller one of the subscribed session AMBR of the remote UE and the PC5 interface AMBR/PC5 link AMBR of the remote UE.

The method shown in FIG. 8A and FIG. 8B may further include S860: The UPF performs data transmission with the remote UE via the relay according to the received PDR.

Specifically, the UPF may obtain, through filtering according to the PDR, data to be sent to the remote UE, and limit, based on the maximum bandwidth in the QER included in the PDR, a rate of sending the data to the remote UE. In other words, the rate of sending the data to the remote UE by the UPF via the relay cannot exceed the maximum bandwidth in the QER.

In this embodiment of this application, if the SMF obtains the AMBR of the remote UE (the subscribed session AMBR and/or the PC5 interface AMBR/PC5 link AMBR), the SMF may determine, in an N4 session configuration, the MBR of the remote UE in the QER based on the AMBR of the remote UE. Therefore, in a process of transmitting a data packet of the remote UE, the UPF may limit, based on the MBR of the remote UE, the rate of sending the data to the remote UE. In addition, the SMF may send the MBR of the remote UE to the relay, so that the relay can update the PC5 link AMBR to the MBR of the remote UE.

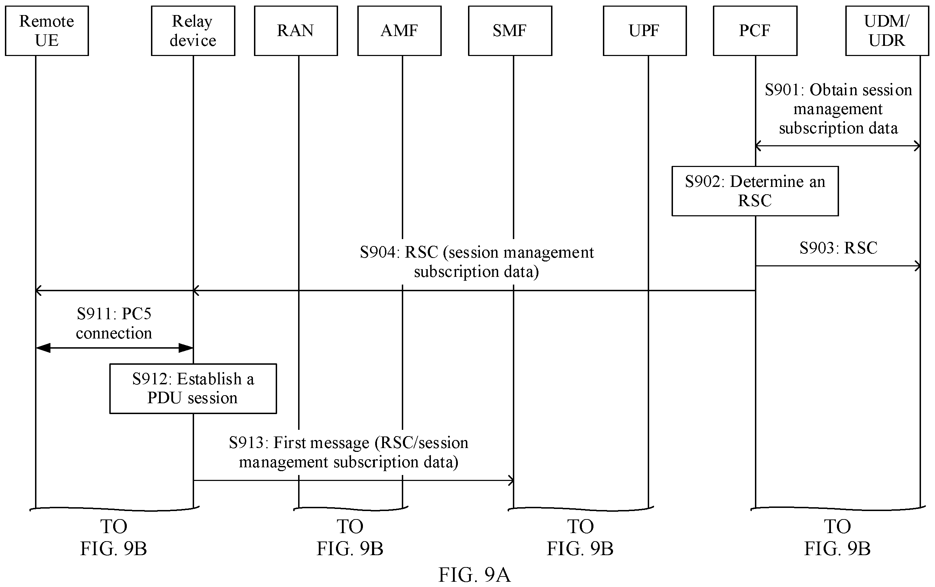

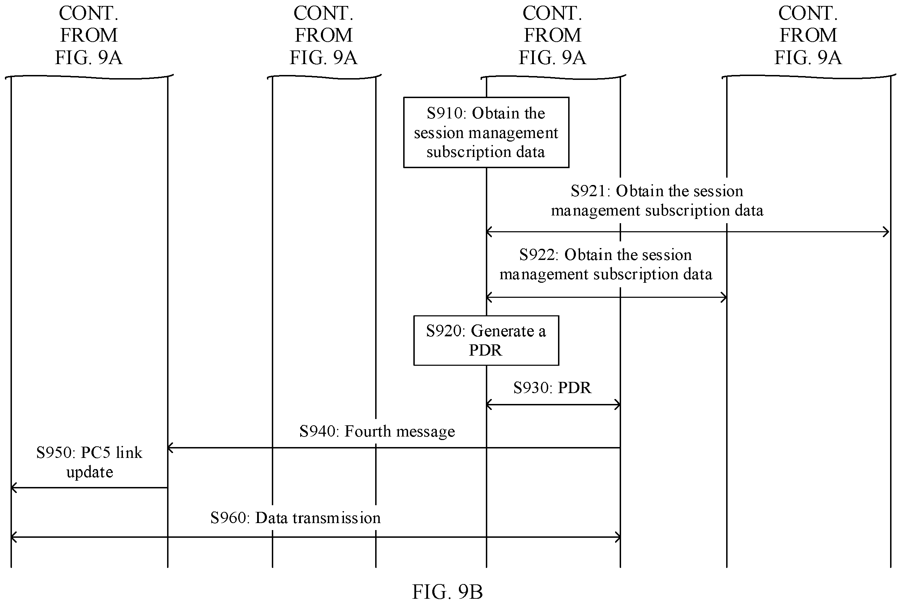

FIG. 9A and FIG. 9B are a schematic flowchart of another service guarantee method according to an embodiment of this application. The service guarantee method includes at least some of the following steps.

S901: A PCF (an example of a policy control network element) obtains session management subscription data of remote UE (an example of a remote terminal device).

When the PCF needs to configure user policy (UE policy) information for the remote UE, the PCF may obtain the session management subscription data of the remote UE from a UDM (an example of a data management network element)/UDR (an example of a data repository network element).

The session management subscription data of the remote UE may include PDU session-related information, such as a DNN, slice information, and a PDU session type. The session management subscription data of the remote UE may further include an AMBR of the remote UE. The AMBR of the remote UE may include a subscribed session AMBR of the remote UE. Optionally, the AMBR of the remote UE may further include a PC5 interface AMBR of the remote UE or a PC5 link AMBR of the remote UE.

S902: The PCF determines a relay service code (relay service code, RSC).

Specifically, the PCF determines the RSC based on the session management subscription data of the remote UE. In other words, the RSC determined by the PCF is associated with the session management subscription data of the remote UE. Specifically, the PCF may determine the RSC based on the AMBR of the remote UE. In other words, the RSC determined by the PCF is associated with the AMBR of the remote UE.

The PCF may determine a first RSC and/or a second RSC based on the session management subscription data of the remote UE. The first RSC is an RSC configured for the remote UE, and the second RSC is an RSC configured for a relay (an example of a relay device). The first RSC and/or the second RSC are/is associated with the session management subscription data of the remote UE.

Optionally, the PCF may determine the first RSC and/or the second RSC based on the AMBR of the remote UE. Optionally, the PCF may determine the first RSC and/or the second RSC based on a smaller one of the subscribed session AMBR of the remote UE and the PC5 interface AMBR/PC5 link AMBR of the remote UE.

Optionally, the PCF may associate the RSC with the session management subscription data of the remote UE for storage.

Optionally, the method may further include S903: The PCF sends the RSC and second indication information to the UDM/UDR, where the second indication information indicates that the RSC is associated with the session management subscription data of the remote UE. Correspondingly, after the UDM/UDR receives the RSC from the PCF, the UDM/UDR associates the RSC with the session management subscription data of the remote UE for storage. In other words, it may be determined that the session management subscription data of the remote UE based on the RSC.

S904: The PCF sends the RSC to the remote UE and the relay.

Specifically, if the PCF determines the first RSC in S902, the PCF may send the first RSC to the remote UE and the relay. Further, the remote UE and the relay may establish a PC5 connection based on the first RSC.

If the PCF determines the second RSC in S902, the PCF may send the second RSC to the remote UE and the relay. Further, the remote UE and the relay may establish a PC5 connection based on the second RSC.

If the PCF determines the first RSC and the second RSC in S902, the PCF may send the first RSC to the remote UE, and send the second RSC to the relay. Further, the remote UE and the relay may establish a PC5 connection based on the first RSC and the second RSC. Optionally, the PCF may send the first RSC and the second RSC to the remote UE and the relay.

Optionally, in S904, the PCF may send the session management subscription data of the remote UE to the remote UE and the relay.

S911: The remote UE and the relay establish the PC5 connection.

The remote UE and the relay may establish the PC5 connection based on the first RSC and/or the second RSC received from the PCF.

Optionally, if the remote UE and the relay receive the session management subscription data of the remote UE from the PCF, the remote UE and the relay may determine a PC5 link AMBR based on the session management subscription data of the remote UE.

For example, if the session management subscription data of the remote UE includes the subscribed session AMBR of the remote UE, the remote UE and the relay may determine the subscribed session AMBR of the remote UE as the PC5 link AMBR.

If the session management subscription data of the remote UE includes the PC5 interface AMBR of the remote UE, the remote UE and the relay may determine the PC5 interface AMBR of the remote UE as the PC5 link AMBR.

If the session management subscription data of the remote UE includes the PC5 link AMBR of the remote UE, the remote UE and the relay may determine the PC5 link AMBR of the remote UE as the PC5 link AMBR.

If the session management subscription data of the remote UE includes the subscribed session AMBR of the remote UE and the PC5 interface AMBR/PC5 link AMBR of the remote UE, the remote UE and the relay may determine the smaller one of the subscribed session AMBR of the remote UE and the PC5 interface AMBR/PC5 link AMBR of the remote UE as the PC5 link AMBR.

S912: The relay establishes a PDU session.

This step is the same as S502 in FIG. 5A and FIG. 5B, and details are not described herein again.

S913: The relay sends a first message to an SMF (an example of a session management network element).

In an implementation, the first message may include the first RSC and/or the second RSC.

In another implementation, if the remote UE and the relay first receive the session management subscription data of the remote UE from the PCF, the first message may include the session management subscription data of the remote UE.

To enable the SMF to provide, in a process of establishing a PDR, a QER that better conforms to a bandwidth actually available to the remote UE, the method procedure shown in FIG. 9A and FIG. 9B further includes the following step.

S910: The SMF obtains the session management subscription data of the remote UE.

As described above, if the first message includes the first RSC and/or the second RSC, the SMF may obtain the session management subscription data of the remote UE in the following manner.

S921: The SMF obtains the subscription session management data of the remote UE from the DDM/UDR.

The SMF may send a third request message to the UDM (the example of the data management network element)/LTDR (the example of the data repository network element), where the third request message is used to request the session management subscription data of the remote UE, and the third request message includes the first RSC and/or the second RSC. As described above, the PCF may send the determined RSC to the DDM/UDR, and the UDM/UDR may associate the RSC with the session management subscription data of the remote UE for storage. Therefore, after receiving the third request message from the SMF, the UDM/UDR may obtain the session management subscription data of the remote UE from a local database based on the first RSC and/or the second RSC in the third request message, and send a third response message to the SMF, where the third response message includes the session management subscription data of the remote UE.

S922: The SMF obtains the subscription session management data of the remote UE from the PCF.

The SMF may send a fifth request message to the PCF, where the fifth request message is used to request the session management subscription data of the remote UE, and the fifth request message includes the first RSC and/or the second RSC. As described above, the PCF may associate the determined RSC with the session management subscription data of the remote UE for storage. Therefore, after receiving the fifth request message from the SMF, the PCF may obtain the session management subscription data of the remote UE from the local database based on the first RSC and/or the second RSC in the fifth request message, and send a fifth response message to the SMF, where the fifth response message includes the session management subscription data of the remote UE.

If the first message includes the session management subscription data of the remote UE, the SMF may obtain the session management subscription data of the remote UE from the first message.

S920: The SMF generates the PDR.

This step is the same as S820 in FIG. 8A and FIG. 8B, and details are not described herein again.

S930: The SMF sends the PDR to a UPF.

This step is the same as S830 in FIG. 8A and FIG. 8B, and details are not described herein again.

Optionally, if the PCF does not send the session management subscription data of the remote UE to the remote UE and the relay in S904, the method shown in FIG. 9A and FIG. 9B may further include S940 and S950.

S940: The SMF sends a fourth message to the relay, where the fourth message includes the AMBR of the remote UE. This step is the same as S840 in FIG. 8A and FIG. 8B, and details are not described herein again.

S950: The remote UE and the relay perform PC5 link update.

This step is the same as S850 in FIG. 8A and FIG. 8B, and details are not described herein again.

The method shown in FIG. 9A and FIG. 9B may further include S960: The UPF performs data transmission with the remote UE via the relay according to the received PDR.

This step is the same as S860 in FIG. 8A and FIG. 8B, and details are not described herein again.

In this embodiment of this application, the PCF may determine, based on the session management subscription data of the remote UE, the RSC associated with the session management subscription data of the remote UE, and send the determined RSC and/or the session management subscription data of the remote UE to the remote UE and the relay. Further, the SMF may determine an MBR value in a QER of an N4 session based on the RSC and/or the session management subscription data of the remote UE that are/is reported by the relay. Therefore, in a process of transmitting a data packet of the remote UE, the UPF may limit a data rate of the remote UE based on the MBR of the remote UE. It should be understood that an execution body (for example, the core network element) in the foregoing method embodiments may perform some or all of the steps in the embodiments. These steps or operations are merely examples. In embodiments of this application, other operations or variations of various operations may be further included.

It should be further understood that, in embodiments of this application, unless otherwise stated or there is a logic conflict, terms and/or descriptions between different embodiments may be consistent and may be mutually referenced, and technical features in different embodiments may be combined based on an internal logical relationship thereof, to form a new embodiment.

It should be further understood that sequence numbers of the foregoing processes do not mean execution sequences in the foregoing method embodiments. The execution sequences of the processes should be determined based on functions and internal logic of the processes, and should not be construed as any limitation on the implementation processes of embodiments of this application.

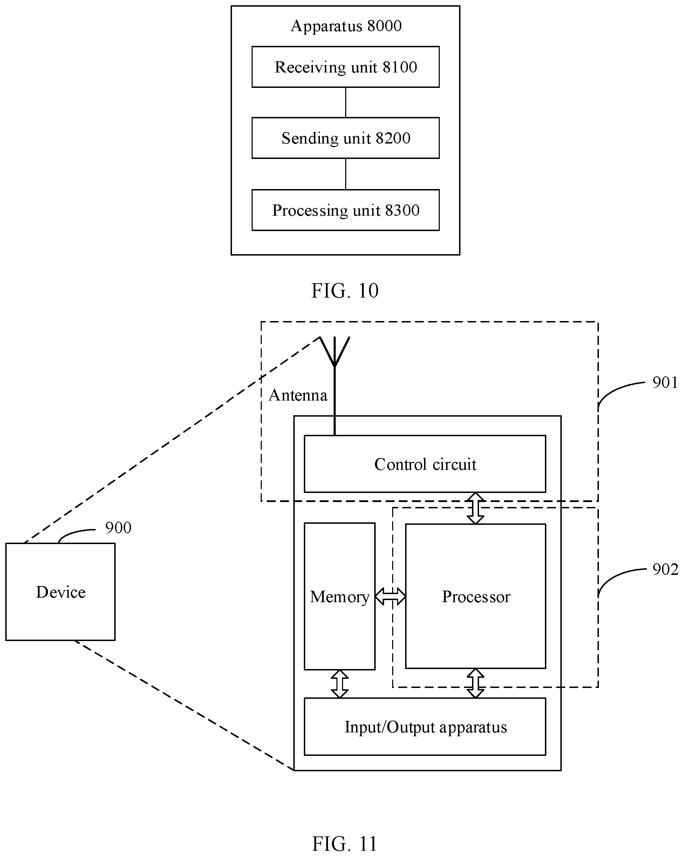

The foregoing describes in detail the service guarantee method provided in embodiments of this application with reference to FIG. 5A and FIG. 5B to FIG. 9A and FIG. 9B. The following describes in detail a service guarantee apparatus provided in embodiments of this application with reference to FIG. 10 to FIG. 20.

FIG. 10 is a schematic diagram of a service guarantee apparatus 8000 according to this application. As shown in FIG. 10, the apparatus 8000 includes a receiving unit 8100, a sending unit 8200, and a processing unit 8300.

The service guarantee apparatus 8000 may be configured to implement a function of the relay device in any one of the foregoing method embodiments. For example, the service guarantee apparatus 8000 may be a relay device.

The service guarantee apparatus 8000 may be used as the relay device, and perform the steps performed by the relay device in the foregoing method embodiments. The receiving unit 8100 and/or the sending unit 8200 may be configured to support the service guarantee apparatus 8000 in performing communication, for example, performing the sending action and/or the receiving action performed by the relay device in FIG. 5A and FIG. 5B to FIG. 9A and FIG. 9B. The processing unit 8300 may be configured to support the service guarantee apparatus 8000 in performing a processing action in the foregoing method embodiments, for example, performing the processing action performed by the relay device in FIG. 5A and FIG. 5B to FIG. 9A and FIG. 9B.

Optionally, the service guarantee apparatus 8000 may further include a storage unit 840 (not shown in FIG. 10), configured to store program code and data of the service guarantee apparatus 8000. Specifically, reference may be made to the following descriptions: The sending unit 8200 is configured to send a first message to a session management network element, where the first message includes a first identifier of a remote terminal device.

The receiving unit 8100 is configured to receive a second quality of service QoS rule from the session management network element, where the second QoS rule is generated based on subscription data of the remote terminal device, and the subscription data of the remote terminal device is obtained based on the first message.

The processing unit 8300 is configured to perform a QoS guarantee on a second communication interface between the relay device and the remote terminal device according to the second QoS rule.

The apparatus 8000 exactly corresponds to the relay device in the method embodiments. The apparatus 8000 may be the relay device in the method embodiments, or a chip or a functional module inside the relay device in the method embodiments. A corresponding unit in the apparatus 8000 is configured to perform a corresponding step performed by the relay device in the method embodiments shown in FIG. 5A and FIG. 5B to FIG. 9A and FIG. 9B.

The receiving unit 8100 in the apparatus 8000 performs a receiving step performed by the relay device in the method embodiments. For example, step S570 of receiving the second QoS rule sent by an access network device in FIG. 5A and FIG. 5B to FIG. 7 is performed, or the step of receiving a fourth message sent by the session management network element in FIG. 8A and FIG. 8B and FIG. 9A and FIG. 9B is performed.

The sending unit 8200 in the apparatus 8000 is configured to implement a function of sending a message to another device. For example, the step of sending a first message to the session management network element in FIG. 5A and

FIG. 5B to FIG. 9A and FIG. 9B is performed.

The processing unit 8300 in the apparatus 8000 performs a step implemented or processed internally by the relay device in the method embodiments.

The receiving unit 8100 and the sending unit 8200 may form a transceiver unit that has both receiving and sending functions. The processing unit 8300 may be a processor. The sending unit 8200 may be a receiver. The receiving unit 8100 may be a transmitter. The receiver and the transmitter may be integrated to form a transceiver.

FIG. 11 is a schematic diagram of a structure of a relay device and a remote terminal device 900 applicable to an embodiment of this application. The relay device or the remote terminal device 900 may be applied to the system shown in FIG. 2. For ease of description, FIG. 11 shows only main components of the relay device or the remote terminal device. As shown in FIG. 11, the relay device or the remote terminal device includes a processor, a memory, a control circuit, an antenna, and an input/output apparatus. The processor is configured to control the antenna and the input/output apparatus to send or receive a signal. The memory is configured to store a computer program. The processor is configured to invoke the computer program from the memory and run the computer program, to perform a corresponding procedure and/or operation performed by the user equipment in the service guarantee method provided in this application. Details are not described again herein.

A person skilled in the art may understand that for ease of description, FIG. 11 shows only one memory and one processor. An actual relay device may have a plurality of processors and a plurality of memories. The memory may also be referred to as a storage medium, a storage device, or the like. This is not limited in this embodiment of this application.

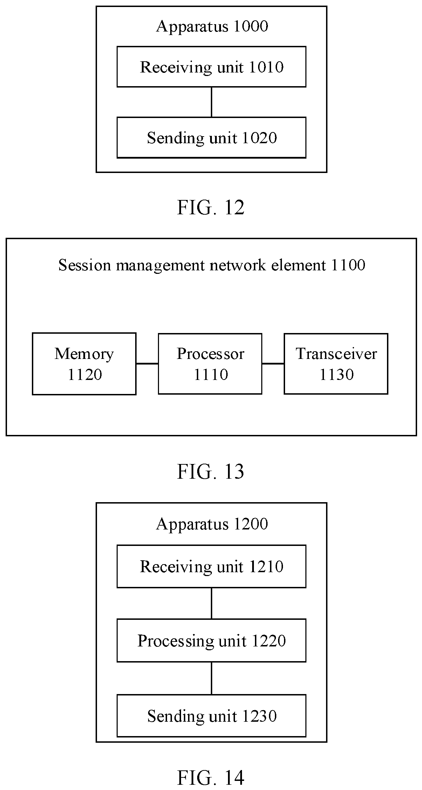

FIG. 12 is a schematic diagram of a service guarantee apparatus 1000 according to this application. As shown in FIG. 12, the apparatus 1000 includes a receiving unit 1010 and a sending unit 1020. The service guarantee apparatus 1000 may be configured to implement a function of the session management network element in any one of the foregoing method embodiments. For example, the service guarantee apparatus 1000 may be an SMF. The network element or network function may be a network element in a hardware device, may be a software function running on dedicated hardware, or may be a virtualized function instantiated on a platform (for example, a cloud platform).

The service guarantee apparatus 1000 may be used as the session management network element, and perform the steps performed by the session management network element in the foregoing method embodiments. The receiving unit 1010 and/or the sending unit 1020 may be configured to support the service guarantee apparatus 1000 in performing communication, for example, performing the sending action and/or the receiving action performed by the session management network element in FIG. 5A and FIG. 5B to FIG. 9A and FIG. 9B.

Optionally, the service guarantee apparatus 1000 may further include a processing unit 1030 (not shown in FIG. 12) that may be configured to support the service guarantee apparatus 1000 in performing the processing action in the foregoing method embodiments, for example, performing the processing action performed by the session management network element in FIG. 5A and FIG. 5B to FIG. 9A and FIG. 9B.

Optionally, the service guarantee apparatus 1000 may further include a storage unit 1040 (not shown in FIG. 12), configured to store program code and data of the service guarantee apparatus 1000. For details, refer to the following descriptions:
The receiving unit 1010 is configured to receive a first message from a relay device, where the first message includes a first identifier of a remote terminal device.

The sending unit 1020 is configured to send a second message to a policy control network element, where the second message includes the first identifier of the remote terminal device, the first identifier of the remote terminal device is used to obtain subscription data of the remote terminal device, the subscription data of the remote terminal device is used to determine a second quality of service QoS rule, and the second QoS rule is a QoS rule corresponding to a second communication interface between the relay device and the remote terminal device.

Alternatively, the receiving unit 1010 is configured to obtain session management subscription data of the remote terminal device, where the session management subscription data includes an AMBR of the remote terminal device. The processing unit 1030 is configured to generate a PDR corresponding to the remote terminal device, where the PDR includes a QER, and a maximum bandwidth in the QER is determined based on the AMBR of the remote terminal device.

The sending unit 1020 is configured to send the PDR to a user plane network element.

The apparatus 1000 exactly corresponds to the session management network element in the method embodiments. The apparatus 1000 may be the session management network element in the method embodiments, or a chip or a functional module inside the session management network element in the method embodiments. A corresponding unit in the apparatus 1000 is configured to perform a corresponding step performed by the session management network element in the method embodiments shown in FIG. 5A and FIG. 5B to FIG. 9A and FIG. 9B.

The receiving unit 1010 in the apparatus 1000 performs the step in which the session management network element receives a message sent by another device in the method embodiments. For example, step S510 of receiving the first message sent by the relay device in FIG. 5A and FIG. 5B and step S550 of receiving a PCC rule sent by the policy control network element in FIG. 5A and FIG. 5B are performed.

The sending unit 1020 in the apparatus 1000 performs the sending step performed by the session management network element in the method embodiments. For example, step S520 of sending the second message to the policy control network element in FIG. 5A and FIG. 5B is performed.

The service guarantee apparatus shown in the apparatus 1000 may further include a processing unit (not shown in FIG. 12), and the processing unit performs a step implemented or processed internally by the session management network element in the method embodiments.

The receiving unit 1010 and the sending unit 1020 may form a transceiver unit that has both receiving and sending functions. The processing unit may be a processor. The sending unit 1020 may be a receiver. The receiving unit 1010 may be a transmitter. The receiver and the transmitter may be integrated to form a transceiver.

As shown in FIG. 13, an embodiment of this application further provides a session management network element 1100. The session management network element 1100 includes a processor 1110, a memory 1120, and a transceiver 1130. The memory 1120 stores instructions or a program. The processor 1130 is configured to execute the instructions or the program stored in the memory 1120. When the instructions or the program stored in the memory 1120 is executed, the transceiver 1130 is configured to perform the operations performed by the receiving unit 1010 and the sending unit 1020 in the apparatus 1000 shown in FIG. 12.

FIG. 14 is a schematic diagram of a service guarantee apparatus 1200 according to this application. As shown in FIG. 14, the apparatus 1200 includes a receiving unit 1210, a processing unit 1220, and a sending unit 1230.

The service guarantee apparatus 1200 may be configured to implement a function of the policy control network element in any one of the foregoing method embodiments. For example, the service guarantee apparatus 1200 may be a PCF. The network element or network function may be a network element in a hardware device, may be a software function running on dedicated hardware, or may be a virtualized function instantiated on a platform (for example, a cloud platform).

The service guarantee apparatus 1200 may be used as the policy control network element, and perform the steps performed by the policy control network element in the foregoing method embodiments. The receiving unit 1210 and/or the sending unit 1230 may be configured to support the service guarantee apparatus 1200 in performing communication, for example, performing the sending action and/or the receiving action performed by the policy control network element in FIG. 5A and FIG. 5B. The processing unit 1220 may be configured to support the service guarantee apparatus 1200 in performing the processing action in the foregoing method embodiments, for example, performing the processing action performed by the policy control network element in FIG. 5A and FIG. 5B. Optionally, the service guarantee apparatus 1200 may further include a storage unit 1240 (not shown in FIG. 14), configured to store program code and data of the service guarantee apparatus 1200. For details, refer to the following descriptions:
The receiving unit 1210 is configured to obtain a first identifier of a remote terminal device, where the first identifier of the remote terminal device is used to obtain subscription data of the remote terminal device.

The processing unit 1220 is configured to generate a policy and charging control PCC rule based on the subscription data of the remote terminal device, where the PCC rule includes a first QoS parameter of a first communication interface and a second QoS parameter of a second communication interface.

The sending unit 1230 is configured to send the PCC rule to a session management network element.

The first communication interface is a communication interface between a relay device and an access network device, the second communication interface is a communication interface between the relay device and the remote terminal device, the first QoS parameter is used to generate a first QoS rule corresponding to the first communication interface, and the second QoS parameter is used to generate a second QoS rule corresponding to the second communication interface.

Alternatively, the service guarantee apparatus may be used as a relay service code obtaining apparatus. In this case, the relay service code obtaining apparatus 1200 may specifically include:
the receiving unit 1210, configured to obtain session management subscription data of a remote terminal device, where the session management subscription data includes an AMBR of the remote terminal device;
the processing unit 1220, configured to determine a relay service code based on the subscription data, where the relay service code is associated with the session management subscription data; and
the sending unit 1230, configured to send the relay service code to the remote terminal device and a relay device.

The apparatus 1200 exactly corresponds to the policy control network element in the method embodiments. The apparatus 1200 may be the policy control network element in the method embodiments, or a chip or a functional module inside the policy control network element in the method embodiments. A corresponding unit in the apparatus 1200 is configured to perform a corresponding step performed by the policy control network element in the method embodiments shown in FIG. 5A and FIG. 5B.

The receiving unit 1210 in the apparatus 1200 performs a receiving step performed by the policy control network element in the method embodiments. For example, step S520 of receiving a second message from the session management network element in FIG. 5A and FIG. 5B, steps S532 and S537 of receiving a policy authorization request message from an application network element in FIG. 5A and FIG. 5B, and step S533 of receiving a subscription message from the application network element in FIG. 5A and FIG. 5B are performed.

The processing unit 1220 performs a step implemented or processed internally by the policy control network element in the method embodiments. For example, step S540 of generating the PCC rule in FIG. 5A and FIG. 5B is performed. The sending unit 1230 in the apparatus 1200 performs the sending step performed by the policy control network element in the method embodiments. For example, step S550 of sending the PCC rule to the session management network element in FIG. 5A and FIG. 5B and step S534 of sending a notification message to the application network element in FIG. 5A and FIG. 5B are performed.

The receiving unit 1210 and the sending unit 1230 may form a transceiver unit that has both receiving and sending functions. The processing unit 1220 may be a processor. The sending unit 1230 may be a receiver. The receiving unit 1210 may be a transmitter. The receiver and the transmitter may be integrated to form a transceiver.

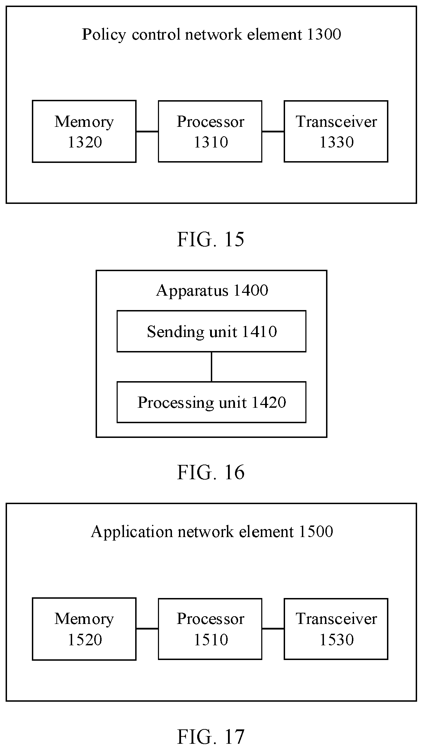

As shown in FIG. 15, an embodiment of this application further provides a policy control network element 1300. The policy control network element 1300 includes a processor 1310, a memory 1320, and a transceiver 1330. The memory 1320 stores instructions or a program. The processor 1330 is configured to execute the instructions or the program stored in the memory 1320. When the instructions or the program stored in the memory 1320 is executed, the transceiver 1330 is configured to perform the operations performed by the receiving unit 1210 and the sending unit 1230 in the apparatus 1200 shown in FIG. 14.

FIG. 16 is a schematic diagram of a service guarantee apparatus 1400 according to this application. As shown in FIG. 16, the apparatus 1400 includes a sending unit 1410 and a processing unit 1420.

The service guarantee apparatus 1400 may be configured to implement a function of the application network element in any one of the foregoing method embodiments. For example, the service guarantee apparatus 1400 may be an AF. The network element or network function may be a network element in a hardware device, may be a software function running on dedicated hardware, or may be a virtualized function instantiated on a platform (for example, a cloud platform).

The service guarantee apparatus 1400 may be used as the application network element, and perform the steps performed by the application network element in the foregoing method embodiments. The receiving unit 1410 may be configured to support the service guarantee apparatus 1400 in performing communication, for example, performing a receiving action performed by the application network element in FIG. 5A and FIG. 5B to FIG. 7. The processing unit 1420 may be configured to support the service guarantee apparatus 1400 in performing the processing action in the foregoing method embodiments, for example, performing the processing action performed by the application network element in FIG. 5A and FIG. 5B to FIG. 7.

Optionally, the service guarantee apparatus 1400 may further include a receiving unit 1430 (not shown in FIG. 16) that supports a sending action performed by the service guarantee apparatus 1400.

Optionally, the service guarantee apparatus 1400 may further include a storage unit 1440 (not shown in FIG. 16), configured to store program code and data of the service guarantee apparatus 1400. For details, refer to the following descriptions:
The processing unit 1420 is configured to determine a policy authorization request message.

The sending unit 1410 is configured to send the policy authorization request message to a policy control network element, where the policy authorization request message includes a second identifier of a remote terminal device, and the remote terminal device is a terminal device that accesses a network via another terminal device.

The second identifier is used to determine a first identifier of the remote terminal device, the first identifier is used to obtain subscription data of the remote terminal device, the subscription data of the remote terminal device is used to determine a second quality of service QoS rule, and the second QoS rule is a QoS rule corresponding to a second communication interface between a relay device and the remote terminal device.

The apparatus 1400 exactly corresponds to the application network element in the method embodiments. The apparatus 1400 may be the application network element in the method embodiments, or a chip or a functional module inside the application network element in the method embodiments. A corresponding unit in the apparatus 1400 is configured to perform a corresponding step performed by the application network element in the method embodiments shown in FIG. 5A and FIG. 5B to FIG. 7.

The sending unit 1410 in the apparatus 1400 performs the sending step performed by the application network element in the method embodiments. For example, steps S532 and S537 of sending the policy authorization request message to the policy control network element in FIG. 5A and FIG. 5B and step S533 of sending a subscription message to the policy control network element in FIG. 5A and FIG. 5B are performed.

The processing unit 1420 performs a step implemented or processed internally by the application network element in the method embodiments.

The service guarantee apparatus shown in the apparatus 1400 may further include a receiving unit (not shown in FIG. 16), and the receiving unit performs the step in which the policy control network element receives a message sent by another device in the method embodiments. For example, step S534 of receiving a notification message sent by a session management network element in FIG. 5A and FIG. 5B is performed.

The receiving unit and the sending unit 1410 may form a transceiver unit that has both receiving and sending functions. The processing unit 1420 may be a processor. The sending unit 1410 may be a receiver. The receiving unit may be a transmitter. The receiver and the transmitter may be integrated to form a transceiver.

As shown in FIG. 17, an embodiment of this application further provides an application network element 1500. The application network element 1500 includes a processor 1510, a memory 1520, and a transceiver 1530. The memory 1520 stores instructions or a program. The processor 1530 is configured to execute the instructions or the program stored in the memory 1520. When the instructions or the program stored in the memory 1520 is executed, the transceiver 1530 is configured to perform the operations performed by the receiving unit and the sending unit 1410 in the apparatus 1400 shown in FIG. 16.

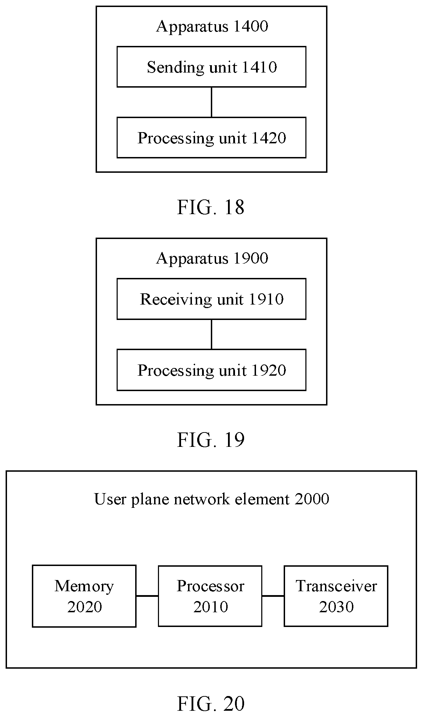

FIG. 18 is a schematic diagram of a service guarantee apparatus 1600 according to this application. As shown in FIG. 18, the apparatus 1600 includes a receiving unit 1610 and a processing unit 1620.

The service guarantee apparatus 1600 may be configured to implement a function of the remote terminal device in any one of the foregoing method embodiments. For example, the service guarantee apparatus 1600 may be a remote terminal device.

The service guarantee apparatus 1600 may be used as the remote terminal device, and perform the steps performed by the remote terminal device in the foregoing method embodiments. The receiving unit 1610 may be configured to support the service guarantee apparatus 1600 in performing communication, for example, performing the receiving action performed by the remote terminal device in FIG. 5A and FIG. 5B to FIG. 9A and FIG. 9B. The processing unit 1620 may be configured to support the service guarantee apparatus 1600 in performing the processing action in the foregoing method embodiments, for example, performing the processing action performed by the remote terminal device in FIG. 5A and FIG. 5B to FIG. 9A and FIG. 9B.

Optionally, the service guarantee apparatus 1600 may further include a sending unit 1630 (not shown in FIG. 18) that may be configured to support the service guarantee apparatus 1600 in performing the sending action in the foregoing method embodiments, for example, performing the sending action performed by the remote terminal device in FIG. 5A and FIG. 5B to FIG. 9A and FIG. 9B.

Optionally, the service guarantee apparatus 1600 may further include a storage unit 1640 (not shown in FIG. 18), configured to store program code and data of the service guarantee apparatus 1600. Specifically, reference may be made to the following descriptions: The receiving unit 1610 is configured to receive a second quality of service QoS rule from a relay device, where the second QoS rule is generated based on subscription data of the remote terminal device.

The processing unit 1630 is configured to perform a QoS guarantee on a second communication interface between the relay device and the remote terminal device according to the second QoS rule.

The apparatus 1600 exactly corresponds to the remote terminal device in the method embodiments. The apparatus 1600 may be the remote terminal device in the method embodiments, or a chip or a functional module inside the remote terminal device in the method embodiments. A corresponding unit in the apparatus 1600 is configured to perform a corresponding step performed by the remote terminal device in the method embodiments shown in FIG. 5A and FIG. 5B to FIG. 9A and FIG. 9B.

The receiving unit 1610 in the apparatus 1600 performs a receiving step performed by the remote terminal device in the method embodiments. For example, step S571 of receiving the second QoS rule sent by the relay device in FIG. 5A and FIG. 5B is performed.

The processing unit 1620 in the apparatus 1600 performs a step implemented or processed internally by the remote terminal device in the method embodiments.

The service guarantee apparatus shown in the apparatus 1600 may further include a sending unit (not shown in FIG. 18), to implement a function of sending a message to another device.

The receiving unit 1610 and the sending unit may form a transceiver unit that has both receiving and sending functions. The processing unit 1620 may be a processor. The sending unit may be a receiver. The receiving unit 1610 may be a transmitter. The receiver and the transmitter may be integrated to form a transceiver

FIG. 19 is a schematic diagram of a service guarantee apparatus 1900 according to this application. As shown in FIG. 19, the apparatus 1900 includes a sending unit 14910 and a processing unit 1920.

The service guarantee apparatus 1900 may be configured to implement a function of the user plane network element in any one of the foregoing method embodiments. For example, the service guarantee apparatus 1900 may be a UPF. The service guarantee apparatus 1900 may be used as the user plane network element, and perform the steps performed by the user plane network element in the foregoing method embodiments. The receiving unit 1910 may be configured to support the service guarantee apparatus 1900 in performing communication, for example, performing the receiving action performed by the user plane network element in FIG. 8A and FIG. 8B and FIG. 9A and FIG. 9B. The processing unit 1920 may be configured to support the service guarantee apparatus 1900 in performing the processing action in the foregoing method embodiments, for example, performing the processing action performed by the user plane network element in FIG. 8A and FIG. 8B and FIG. 9A and FIG. 9B.

Optionally, the service guarantee apparatus 1900 may further include a receiving unit 1930 (not shown in FIG. 19) that supports a sending action performed by the service guarantee apparatus 1900.

Optionally, the service guarantee apparatus 1900 may further include a storage unit 1940 (not shown in FIG. 19), configured to store program code and data of the service guarantee apparatus 1900. For details, refer to the following descriptions:
The receiving unit 1910 is configured to receive a PDR from a session management network element, where the PDR corresponds to a remote terminal device, the PDR includes a QER, and a maximum bandwidth in the QER is determined based on an AMBR of the remote terminal device.

The processing unit 1920 is configured to determine, based on the maximum bandwidth in the QER, a rate of sending data to the remote terminal device.

The apparatus 1900 exactly corresponds to the user plane network element in the method embodiments. The apparatus 1900 may be the user plane network element in the method embodiments, or a chip or a functional module inside the user plane network element in the method embodiments. A corresponding unit in the apparatus 1900 is configured to perform a corresponding step performed by the user plane network element in the method embodiments shown in FIG. 8A and FIG. 8B and FIG. 9A and FIG. 9B.

The sending unit 1910 in the apparatus 1900 performs the sending step performed by the user plane network element in the method embodiments. For example, the step of sending data to the remote terminal device via a relay device in FIG. 8A and FIG. 8B is performed.

The processing unit 1920 performs a step implemented or processed internally by the user plane network element in the method embodiments.

The service guarantee apparatus shown in the apparatus 1900 may further include a receiving unit (not shown in FIG. 19), and the receiving unit performs the step in which the user plane network element receives a message sent by another device in the method embodiments. For example, the PDR sent by the session management network element in FIG. 8A and FIG. 8B is received.

The receiving unit and the sending unit 1910 may form a transceiver unit that has both receiving and sending functions. The processing unit 1920 may be a processor. The sending unit 1910 may be a receiver. The receiving unit may be a transmitter. The receiver and the transmitter may be integrated to form a transceiver.

As shown in FIG. 20, an embodiment of this application further provides a user plane network element 2000. The user plane network element 2000 includes a processor 2010, a memory 2020, and a transceiver 2030. The memory 2020 stores instructions or a program. The processor 2030 is configured to execute the instructions or the program stored in the memory 2020. When the instructions or the program stored in the memory 2020 is executed, the transceiver 2030 is configured to perform the operations performed by the receiving unit and the sending unit in the apparatus 1900 shown in FIG. 19.

An embodiment of this application further provides a communication system, including a relay device, a remote terminal device, a session management network element, a policy control network element, a user plane network element, and an application network element described above.

This application further provides a computer-readable storage medium. The computer-readable storage medium stores instructions. When the instructions are run on a computer, the computer is enabled to perform the steps performed by the remote terminal device in the methods shown in FIG. 5A and FIG. 5B to FIG. 9A and FIG. 9B.

This application further provides a computer-readable storage medium. The computer-readable storage medium stores instructions. When the instructions are run on a computer, the computer is enabled to perform the steps performed by the relay device in the methods shown in FIG. 5A and FIG. 5B to FIG. 9A and FIG. 9B.

This application further provides a computer-readable storage medium. The computer-readable storage medium stores instructions. When the instructions are run on a computer, the computer is enabled to perform the steps performed by the session management network element in the methods shown in FIG. 5A and FIG. 5B to FIG. 9A and FIG. 9B. This application further provides a computer-readable storage medium. The computer-readable storage medium stores instructions. When the instructions are run on a computer, the computer is enabled to perform the steps performed by the policy control network element in the methods shown in FIG. 5A and FIG. 5B to FIG. 9A and FIG. 9B.

This application further provides a computer-readable storage medium. The computer-readable storage medium stores instructions. When the instructions are run on a computer, the computer is enabled to perform the steps performed by the application network element in the methods shown in FIG. 5A and FIG. 5B to FIG. 7.

This application further provides a computer-readable storage medium. The computer-readable storage medium stores instructions. When the instructions are run on a computer, the computer is enabled to perform the steps performed by the user plane network element in the methods shown in FIG. 8A and FIG. 8B and FIG. 9A and FIG. 9B.

This application further provides a computer program product including instructions. When the computer program product runs on a computer, the computer is enabled to perform the steps performed by the remote terminal device in the methods shown in FIG. 5A and FIG. 5B to FIG. 9A and FIG. 9B.

This application further provides a computer program product including instructions. When the computer program product runs on a computer, the computer is enabled to perform the steps performed by the relay device in the methods shown in FIG. 5A and FIG. 5B to FIG. 7.

This application further provides a computer program product including instructions. When the computer program product runs on a computer, the computer is enabled to perform the steps performed by the session management network element in the methods shown in FIG. 5A and FIG. 5B to FIG. 9A and FIG. 9B.

This application further provides a computer program product including instructions. When the computer program product runs on a computer, the computer is enabled to perform the steps performed by the policy control network element in the methods shown in FIG. 5A and FIG. 5B to FIG. 9A and FIG. 9B.

This application further provides a computer program product including instructions. When the computer program product runs on a computer, the computer is enabled to perform the steps performed by the application network element in the methods shown in FIG. 5A and FIG. 5B to FIG. 9A and FIG. 9B.

This application further provides a computer program product including instructions. When the computer program product runs on a computer, the computer is enabled to perform the steps performed by the user plane network element in the methods shown in FIG. 8A and FIG. 8B and FIG. 9A and FIG. 9B.

This application further provides a chip, including a processor. The processor is configured to read and run a computer program stored in a memory, to perform a corresponding operation and/or procedure performed by the remote terminal device in the service guarantee method provided in this application. Optionally, the chip further includes the memory. The memory and the processor are connected to the memory by using a circuit or a wire. The processor is configured to read and execute the computer program in the memory. Further, optionally, the chip system further includes a communication interface, and the processor is connected to the communication interface. The communication interface is configured to receive data and/or information that need/needs to be processed, and the processor obtains the data and/or the information from the communication interface, and processes the data and/or the information. The communication interface may be an input/output interface.

This application further provides a chip, including a processor. The processor is configured to read and run a computer program stored in a memory, to perform a corresponding operation and/or procedure performed by the relay device in the service guarantee method provided in this application. Optionally, the chip further includes the memory. The memory and the processor are connected to the memory by using a circuit or a wire. The processor is configured to read and execute the computer program in the memory. Further, optionally, the chip system further includes a communication interface, and the processor is connected to the communication interface. The communication interface is configured to receive data and/or information that need/needs to be processed, and the processor obtains the data and/or the information from the communication interface, and processes the data and/or the information. The communication interface may be an input/output interface.

This application further provides a chip, including a processor. The processor is configured to invoke and run a computer program stored in a memory, to perform a corresponding operation and/or procedure performed by the session management network element in the service guarantee method provided in this application. Optionally, the chip further includes the memory. The memory and the processor are connected to the memory by using a circuit or a wire. The processor is configured to read and execute the computer program in the memory. Further, optionally, the chip system further includes a communication interface, and the processor is connected to the communication interface. The communication interface is configured to receive data and/or information that need/needs to be processed, and the processor obtains the data and/or the information from the communication interface, and processes the data and/or the information. The communication interface may be an input/output interface.

This application further provides a chip, including a processor. The processor is configured to invoke and run a computer program stored in a memory, to perform a corresponding operation and/or procedure performed by the policy control network element in the service guarantee method provided in this application. Optionally, the chip further includes the memory. The memory and the processor are connected to the memory by using a circuit or a wire. The processor is configured to read and execute the computer program in the memory. Further, optionally, the chip system further includes a communication interface, and the processor is connected to the communication interface. The communication interface is configured to receive data and/or information that need/needs to be processed, and the processor obtains the data and/or the information from the communication interface, and processes the data and/or the information. The communication interface may be an input/output interface.

This application further provides a chip, including a processor. The processor is configured to invoke and run a computer program stored in a memory, to perform a corresponding operation and/or procedure performed by the application network element in the service guarantee method provided in this application. Optionally, the chip further includes the memory. The memory and the processor are connected to the memory by using a circuit or a wire. The processor is configured to read and execute the computer program in the memory. Further, optionally, the chip system further includes a communication interface, and the processor is connected to the communication interface. The communication interface is configured to receive data and/or information that need/needs to be processed, and the processor obtains the data and/or the information from the communication interface, and processes the data and/or the information. The communication interface may be an input/output interface.

This application further provides a chip, including a processor. The processor is configured to invoke and run a computer program stored in a memory, to perform a corresponding operation and/or procedure performed by the user plane network element in the service guarantee method provided in this application. Optionally, the chip further includes the memory. The memory and the processor are connected to the memory by using a circuit or a wire. The processor is configured to read and execute the computer program in the memory. Further, optionally, the chip system further includes a communication interface, and the processor is connected to the communication interface. The communication interface is configured to receive data and/or information that need/needs to be processed, and the processor obtains the data and/or the information from the communication interface, and processes the data and/or the information. The communication interface may be an input/output interface.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be understood that, the foregoing chip may be alternatively replaced with a chip system, and details are not described herein.

In this application, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist. The foregoing descriptions are merely specific implementations of this application, but are not intended to limit the protection scope of this application. Any variation or replacement readily figured out by a person skilled in the art within the technical scope disclosed in this application shall fall within the protection scope of this application.

Therefore, the protection scope of this application shall be subject to the protection scope of the claims.

## Claims

1. A service guarantee method, applied to a case in which a remote terminal device accesses a network via a relay device, and comprising:
obtaining, by a policy control network element, a first identifier of the remote terminal device, wherein the first identifier is used to obtain subscription data of the remote terminal device;
generating, by the policy control network element, a policy and charging control PCC rule based on the subscription data of the remote terminal device, wherein the PCC rule comprises a first quality of service QoS parameter of a first communication interface and a second QoS parameter of a second communication interface; and
sending, by the policy control network element, the PCC rule to a session management network element, wherein
the first communication interface is a communication interface between the relay device and an access network device, the second communication interface is a communication interface between the relay device and the remote terminal device, the first QoS parameter is used to generate a first QoS rule corresponding to the first communication interface, and the second QoS parameter is used to generate a second QoS rule corresponding to the second communication interface.

2. The method according to claim 1, wherein the method further comprises:
obtaining, by the policy control network element, internet protocol IP address information of the remote terminal device; and
determining, by the policy control network element, flow description information based on the IP address information, wherein the flow description information is carried in the PCC rule.

3. The method according to claim 1 or 2, wherein the obtaining, by a policy control network element, a first identifier comprises:
receiving, by the policy control network element, a second message from the session management network element, wherein the second message comprises the first identifier; or
receiving, by the policy control network element, a policy authorization request message from an application network element, wherein the policy authorization request message comprises a second identifier of the remote terminal device, and the second identifier is used to determine the first identifier.

4. The method according to claim 3, wherein the second identifier comprises at least one of the following identifiers:
a generic public subscription identifier GPSI of the remote terminal device, a user identifier allocated by a third party to the remote terminal device, an internet protocol version 6 IPv6 address of the remote terminal device, an IPv6 address prefix of the remote terminal device, and an identifier consisting of an internet protocol version 4 IPv4 address and a transmission control protocol or user datagram protocol TCP/LTDP port number that are of the relay device.

5. The method according to claim 3 or 4, wherein the second message further comprises session management subscription data of the remote terminal device, the session management subscription data comprises an aggregate maximum bit rate AMBR of the remote terminal device, and the second QoS parameter comprises an AMBR available to the remote terminal device.

6. The method according to claim 3 or 4, wherein the policy authorization request message further comprises:
a service identifier and/or a QoS parameter requirement, wherein the service identifier indicates a service type, and the QoS parameter requirement is used to assist the policy control network element in generating the PCC rule.

7. The method according to claim 6, wherein the service identifier comprises at least one of the following information:
a first relay service code, a second relay service code, an application identifier APP ID, and a proximity-based service application name ProSe APP ID, wherein
the first relay service code is a relay service code configured for the remote terminal device, and the second relay service code is a relay service code configured for the relay device.

8. The method according to any one of claims 3 to 7, wherein before the receiving, by the policy control network element, a policy authorization request message from an application network element, the method further comprises:
receiving, by the policy control network element, a subscription message from the application network element, wherein the subscription message is used to subscribe to
whether the remote terminal device goes online; and
sending, by the policy control network element, a notification message to the application network element, wherein the notification message indicates that the remote terminal device goes online.

9. The method according to claim 8, wherein the notification message comprises the first identifier and the service identifier, wherein the service identifier identifies the service type.

10. The method according to any one of claims 3 to 9, wherein the second message and/or the policy authorization request message further comprise/comprises:
the first relay service code and/or the second relay service code, wherein
the first relay service code is the relay service code configured for the remote terminal device, and the second relay service code is the relay service code configured for the relay device; and
the generating, by the policy control network element, a PCC rule based on the subscription data of the remote terminal device comprises:
generating, by the policy control network element, the PCC rule based on the subscription data of the remote terminal device and the first relay service code and/or the second relay service code.

11. The method according to claim 10, wherein the method further comprises:
determining, by the policy control network element, the service type based on the first relay service code and/or the second relay service code; or
learning of, by the policy control network element, the service type from a 5G direct discovery name management function DDNMF network element based on the first relay service code and/or the second relay service code.

12. The method according to any one of claims 1 to 11, wherein the first identifier comprises:
the generic public subscription identifier GPSI and/or the user identifier allocated by the third-party application to the remote terminal device.

13. A service guarantee method, comprising:
determining, by an application network element, a policy authorization request message; and
sending, by the application network element, the policy authorization request message to a policy control network element, wherein the policy authorization request message comprises a second identifier of a remote terminal device, and the remote terminal device is a terminal device that accesses a network via another terminal device, wherein
the second identifier is used to determine a first identifier of the remote terminal device, the first identifier is used to obtain subscription data of the remote terminal device, the subscription data of the remote terminal device is used to determine a second quality of service QoS rule, and the second QoS rule is a QoS rule corresponding to a second communication interface between a relay device and the remote terminal device.

14. The method according to claim 13, wherein before the determining, by an application network element, a policy authorization request message, the method further comprises:
sending, by the application network element, a subscription message to the policy control network element, wherein the subscription message is used to subscribe to information indicating whether the remote terminal device goes online; and
receiving, by the application network element, a notification message from the policy control network element, wherein the notification message indicates that the remote terminal device goes online; or
obtaining, by the application network element, information about the policy control network element through a query request message.

15. The method according to claim 14, wherein the determining, by an application network element, a policy authorization request message comprises:
determining, by the application network element, the policy authorization request message based on the first identifier and a service identifier, wherein the service identifier identifies a service type, and
the first identifier and the service identifier are carried in the notification message, or the first identifier and the service identifier are obtained by the application network element through perception via a user plane.

16. The method according to claim 15, wherein when the first identifier and the service identifier are obtained by the application network element through perception via the user plane, the method further comprises:
perceiving, by the application network element via the user plane, that the remote terminal device goes online.

17. A service guarantee method, applied to a case in which a remote terminal device accesses a network via a relay device, and comprising:
receiving, by a session management network element, a first message from the relay device, wherein the first message comprises a first identifier of the remote terminal device; and
sending, by the session management network element, a second message to a policy control network element, wherein the second message comprises the first identifier,
the first identifier is used to obtain subscription data of the remote terminal device, the subscription data of the remote terminal device is used to determine a second quality of service QoS rule, and the second QoS rule is a QoS rule corresponding to a second communication interface between the relay device and the remote terminal device.

18. The method according to claim 17, wherein the method further comprises:
receiving, by the session management network element, a policy and charging control PCC rule from the policy control network element, wherein the PCC rule comprises a first QoS parameter of a first communication interface and a second QoS parameter of the second communication interface, and the first communication interface is a communication interface between the relay device and an access network device; and
generating, by the session management network element based on the first QoS parameter, a first QoS rule corresponding to the first communication interface, and generating the second QoS rule based on the second QoS parameter

19. A service guarantee method, applied to a case in which a remote terminal device accesses a network via a relay device, and comprising:
sending, by the relay device, a first message to a session management network element, wherein the first message comprises a first identifier of the remote terminal device;
receiving, by the relay device, a second quality of service QoS rule from the session management network element, wherein the second QoS rule is generated based on subscription data of the remote terminal device corresponding to the first identifier; and
performing, by the relay device, a QoS guarantee on a second communication interface between the relay device and the remote terminal device according to the second QoS rule.

20. The method according to claim 19, wherein the method further comprises:
sending, by the relay device, the second QoS rule to the remote terminal device.

21. The method according to claim 19 or 20, wherein the first message further comprises:
a first relay service code and/or a second relay service code, wherein the first relay service code or the second relay service code is used to determine the second QoS rule,
the first relay service code is a relay service code configured for the remote terminal device, and the second relay service code is a relay service code configured for the relay device.

22. The method according to claim 21, wherein the first relay service code and/or the second relay service code are/is associated with session management subscription data of the remote terminal device.

23. The method according to any one of claims 19 to 22, wherein the method further comprises:
receiving, by the relay device, a fourth message from the session management network element, wherein the fourth message comprises the session management subscription data of the remote terminal device, and the session management subscription data comprises an aggregate maximum bit rate AMBR of the remote terminal device; and
determining, by the relay device, an AMBR of a PC5 link between the relay device and the remote terminal device based on the AMBR of the remote terminal device.

24. A service guarantee method, applied to a case in which a remote terminal device accesses a network via a relay device, and comprising:
receiving, by the remote terminal device, a second quality of service QoS rule from the relay device, wherein the second QoS rule is generated based on subscription data of the remote terminal device; and
performing, by the remote terminal device, a QoS guarantee on a second communication interface between the relay device and the remote terminal device according to the second QoS rule.

25. A service guarantee method, applied to a case in which a remote terminal device accesses a network via a relay device, and comprising:
obtaining, by a session management network element, session management subscription data of the remote terminal device, wherein the session management subscription data comprises an aggregate maximum bit rate AMBR of the remote terminal device;
generating, by the session management network element, a packet detection rule PDR corresponding to the remote terminal device, wherein the PDR comprises a quality of service QoS enforcement rule QER, and a maximum bandwidth in the QER is determined based on the AMBR of the remote terminal device; and
sending, by the session management network element, the PDR to a user plane network element.

26. The method according to claim 25, wherein the method further comprises:
sending, by the session management network element, a fourth message to the relay device, wherein the fourth message comprises the AMBR of the remote terminal device.

27. The method according to claim 25 or 26, wherein the AMBR of the remote terminal device comprises at least one of the following: a subscribed session AMBR of the remote terminal device, a PC5 interface AMBR of the remote terminal device, and a PC5 link AMBR of the remote terminal device.

28. The method according to claim 27, wherein the maximum bandwidth in the QER is a smaller one of the subscribed session AMBR of the remote terminal device and the PC5 interface AMBR/PC5 link AMBR of the remote terminal device.

29. The method according to any one of claims 25 to 28, wherein the method further comprises:
sending, by the session management network element, a second message to a policy control network element, wherein the second message comprises the session management subscription data; and
receiving, by the session management network element, a session-related policy and/or a policy and charging control PCC rule from the policy control network element, wherein the session-related policy and/or the PCC rule comprise/comprises a second QoS parameter of a second communication interface, the second communication interface is a communication interface between the relay device and the remote terminal device, the second QoS parameter comprises an AMBR available to the remote terminal device, and
the maximum bandwidth in the QER is a smaller one of the AMBR of the remote terminal device and the AMBR available to the remote terminal device.

30. The method according to any one of claims 25 to 29, wherein the obtaining, by a session management network element, session management subscription data of the remote terminal device comprises:
receiving, by the session management network element, a first message from the relay device, wherein the first message comprises a first identifier of the remote terminal device; and
obtaining, by the session management network element, the session management subscription data based on the first identifier.

31. The method according to claim 30, wherein the obtaining, by the session management network element, the session management subscription data based on the first identifier comprises:
sending, by the session management network element, a second request message to a data management network element/data repository network element, wherein the second request message is used to request the session management subscription data, and the second request message comprises the first identifier; and
receiving, by the session management network element, a second response message from the data management network element/data repository network element, wherein the second response message comprises the session management subscription data.

32. The method according to claim 31, wherein the second request message further comprises first indication information, and the first indication information indicates the remote terminal device to access the network via the relay device.

33. The method according to claim 30, wherein the obtaining, by the session management network element, the session management subscription data based on the first identifier comprises:
sending, by the session management network element, a third request message to a data network-authentication, authorization and accounting DN-AAA server, wherein the third request message is used to request the session management subscription data, and the third request message comprises the first identifier; and
receiving, by the session management network element, a third response message from the DN-AAA server, wherein the third response message comprises the session management subscription data.

34. The method according to any one of claims 25 to 29, wherein the obtaining, by a session management network element, session management subscription data of the remote terminal device comprises:
receiving, by the session management network element, a first relay service code and/or a second relay service code from the relay device, wherein the first relay service code and/or the second relay service code are/is associated with the session management subscription data;
sending, by the session management network element, a third request message to a data management network element/data repository network element, wherein the third request message is used to request the session management subscription data, and the third request message comprises the first relay service code and/or the second relay service code; and
receiving, by the session management network element, a third response message from the data management network element/data repository network element, wherein the third response message comprises the session management subscription data.

35. The method according to any one of claims 25 to 29, wherein the obtaining, by a session management network element, session management subscription data of the remote terminal device comprises:
receiving, by the session management network element, a first message from the relay device, wherein the first message comprises the session management subscription data.

36. A service guarantee method, applied to a case in which a remote terminal device accesses a network via a relay device, and comprising:
receiving, by a user plane network element, a packet detection rule PDR from a session management network element, wherein the PDR corresponds to the remote terminal device, the PDR comprises a quality of service QoS enforcement rule QER, and a maximum bandwidth in the QER is determined based on an aggregate maximum bit rate AMBR of the remote terminal device; and
determining, by the user plane network element based on the maximum bandwidth in the QER, a rate of sending data to the remote terminal device.

37. The method according to claim 36, wherein the AMBR of the remote terminal device comprises at least one of the following: a subscribed session AMBR of the remote terminal device, a PC5 interface AMBR of the remote terminal device, and a PC5 link AMBR of the remote terminal device.

38. The method according to claim 37, wherein the maximum bandwidth in the QER is a smaller one of the subscribed session AMBR of the remote terminal device and the PC5 interface AMBR/PC5 link AMBR of the remote terminal device.

39. A relay service code obtaining method, applied to a case in which a remote terminal device accesses a network via a relay device, and comprising:
obtaining, by a policy control network element, session management subscription data of the remote terminal device, wherein the session management subscription data comprises an aggregate maximum bit rate AMBR of the remote terminal device;
determining, by the policy control network element, a relay service code based on the subscription data, wherein the relay service code is associated with the session management subscription data; and
sending, by the policy control network element, the relay service code to the remote terminal device and the relay device.

40. The method according to claim 39, wherein the method further comprises:
sending, by the policy control network element, the relay service code and second indication information to a data management network element/data repository network element, wherein the second indication information indicates that the relay service code is associated with the session management subscription data.

41. The method according to claim 39 or 40, wherein the method further comprises:
sending, by the policy control network element, the session management subscription data to the remote terminal device and the relay device.

42. The method according to any one of claims 39 to 41, wherein the AMBR of the remote terminal device comprises at least one of the following: a subscribed session AMBR of the remote terminal device, a PC5 interface AMBR of the remote terminal device, and a PC5 link AMBR of the remote terminal device.

43. A service guarantee apparatus, configured to implement the method according to any one of claims 1 to 12.

44. A service guarantee apparatus, configured to implement the method according to any one of claims 13 to 16.

45. A service guarantee apparatus, configured to implement the method according to claim 17 or 18.

46. A service guarantee apparatus, configured to implement the method according to any one of claims 19 to 23.

47. A service guarantee apparatus, configured to implement the method according to claim 24.

48. A service guarantee apparatus, configured to implement the method according to any one of claims 25 to 35.

49. A service guarantee apparatus, configured to implement the method according to any one of claims 36 to 38.

50. A relay service code obtaining apparatus, configured to implement the method according to any one of claims 39 to 42.

51. A communication device, comprising:
a memory, wherein the memory is configured to store a computer program; and
a transceiver, wherein the transceiver is configured to perform sending and receiving steps;
a processor, wherein the processor is configured to invoke the computer program from the memory and run the computer program, so that the communication device performs the method according to any one of claims 1 to 12, the communication device performs the method according to any one of claims 13 to 16, the communication device performs the method according to claim 17 or 18, the communication device performs the method according to any one of claims 19 to 23, the communication device performs the method according to claim 24, the communication device performs the method according to any one of claims 25 to 35, the communication device performs the method according to any one of claims 36 to 38, or the communication device performs the method according to any one of claims 39 to 42.

52. A computer-readable storage medium, wherein the computer-readable medium stores a computer program, and when the computer program is run on a computer, the computer is enabled to perform the method according to any one of claims 1 to 12, the computer is enabled to perform the method according to any one of claims 13 to 16, the computer is enabled to perform the method according to claim 17 or 18, the computer is enabled to perform the method according to any one of claims 19 to 23, the computer is enabled to perform the method according to claim 24, the computer is enabled to perform the method according to any one of claims 25 to 35, the computer is enabled to perform the method according to any one of claims 36 to 38, or the computer is enabled to perform the method according to any one of claims 39 to 42.

53. A communication system, comprising:
the service guarantee apparatus according to claim 43, the service guarantee apparatus according to claim 44, the service guarantee apparatus according to claim 45 or 48, the service guarantee apparatus according to claim 46, the service guarantee apparatus according to claim 47, the service guarantee apparatus according to claim 49, and the relay service code obtaining apparatus according to claim 50.
